(19) **Europäisches Patentamt**

**European Patent Office**

**Office européen des brevets**

(11) **EP 1 426 468 A1**

(12) **EUROPEAN PATENT APPLICATION**
published in accordance with Art. 158(3) EPC

| | |
|---|---|
| (43) Date of publication:<br>**09.06.2004 Bulletin 2004/24** | (51) Int Cl.⁷: **C25B 1/02**, C25B 13/04,<br>C01B 3/04, H01M 8/00 |
| (21) Application number: **02765497.9** | (86) International application number:<br>**PCT/JP2002/009291** |
| (22) Date of filing: **11.09.2002** | (87) International publication number:<br>**WO 2003/025251 (27.03.2003 Gazette 2003/13)** |

(84) Designated Contracting States:
**AT BE BG CH CY CZ DE DK EE ES FI FR GB GR IE IT LI LU MC NL PT SE SK TR**
Designated Extension States:
**AL LT LV MK RO SI**

(30) Priority: **13.09.2001 JP 2001277790**

(71) Applicant: **Sony Corporation**
**Tokyo 141-0001 (JP)**

(72) Inventors:
• **MARUYAMA, Ryuichiro**
**c/o SONY CORPORATION**
**Shinagawa-ku, Tokyo 141-0001 (JP)**

• **MIYAZAWA, Hiroshi c/o SONY CORPORATION**
**Shinagawa-ku, Tokyo 141-0001 (JP)**
• **OOGANE, Makoto c/o SONY CORPORATION**
**Shinagawa-ku, Tokyo 141-0001 (JP)**

(74) Representative: **Körber, Martin, Dipl.-Phys.**
**Mitscherlich & Partner**
**Patentanwälte**
**Sonnenstrasse 33**
**80331 München (DE)**

(54) **HYDROGEN GAS MANUFACTURING AND FILLING EQUIPMENT AND ELECTROCHEMICAL EQUIPMENT**

(57)    The present invention is relative with an electrochemical apparatus including a hydrogen manufacturing and preserving device capable of manufacturing hydrogen and compressing and charging the so manufactured hydrogen. The apparatus includes an electrolytic unit (1) for generating a hydrogen gas on electrolysis, a pressurizing unit (2) for compressing the hydrogen gas generated by the electrolytic unit (1) and a charging unit (4) for charging the compressed hydrogen gas to the hydrogen gas tanks (50 to 58). The pressurizing unit (2) operates as a fuel cell unit run reversible on being supplied with the hydrogen gas from the charging unit (4) and with oxygen or an oxygen-containing gas.

FIG.2

## Description

Technical Field

This invention relates to an apparatus for manufacturing and charging hydrogen gas and electrochemical apparatus.

Background Art

A fuel cell, employing a hydrogen gas as an electrode active material, has been offered. The fuel cell is stirring up notice as being a source energy imposing only a low load on the environment. From the technological perspective, how to generate and preserve a hydrogen gas is crucial in order for the fuel cell to become popular.

It may be premeditated that, in future, the hydrogen gas will be in widespread use, such that the gas may be delivered directly to households and become readily available. For generating the hydrogen gas, the method by electrolysis of water is predominantly used.

As the technique for preserving the hydrogen gas, a method for preserving the hydrogen gas, compressed to a high pressure, in a high-pressure vessel, or a method of using a hydrogen gas occluding alloy, is used. It is noted that, whether the hydrogen gas is preserved in a high pressure vessel, or a hydrogen gas occluding alloy is used, the quantity of the preserved hydrogen gas becomes larger if the hydrogen gas is compressed to a higher pressure. Thus, the technique of compressing and preserving the hydrogen gas is crucial.

This method has a drawback that the apparatus tends to be increased in size, such that, in order for a user to generate and utilize the hydrogen gas readily for personal use, the conventional method of applying a mechanical pressure is not proper.

As a method for compressing the hydrogen gas in a manner free of this inconvenience, an electrochemical gas compression apparatus has been proposed in US Patent 4671080 and in Japanese Laying-Open Patent Publication H-5-242850.

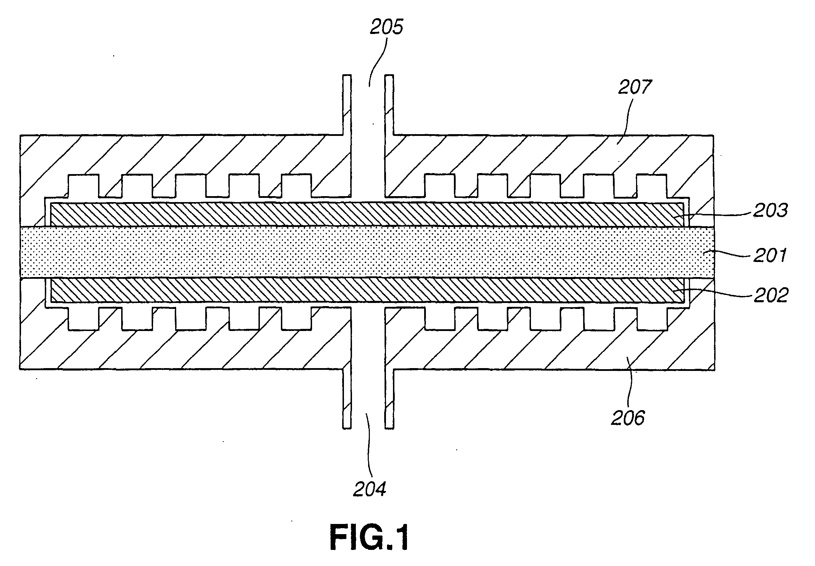

Fig.1 shows a conventional electro-chemical hydrogen gas compressor disclosed in the US Patent 4671080. Referring to Fig.1, 201 denotes a film of e.g. a perfluorosulfonate resin, as an ionic conduction film, having a thickness of approximately 0.2 mm, 202 denotes an electrode for gas diffusion, operating as a positive electrode, carrying a catalyst of e.g. platinum, 203 denotes an electrode for gas diffusion, operating as a negative electrode, carrying a catalyst similar to the catalyst carried by the positive electrode 202, 204 denotes a positive electrode side gas flow channel, 205 denotes a negative electrode side gas flow channel, 206 denotes a positive electrode side metallic current collector, and 207 denotes a negative electrode side metallic current collector. As this perfluorosulfonate resin, Nafion 117, manufactured by Du Pont (Inc.) (referred to below as Nafion), is used.

The operating principle of this apparatus is now explained. When the hydrogen gas is supplied to a gas flow channel 204 on the side of the electrode for gas diffusion 202, this hydrogen gas loses an electron on the gas diffusion electrode 202, to yield $H_3O^+$ ions, in accordance with the following formula (1):

$$H_2 + 2H_2O \rightarrow 2e^- + 2H_3O^+ \qquad (1).$$

This $2H_3O^+$ ion, thus yielded, proceeds to the opposite side electrode for gas diffusion 203, with the voltage as a driving power, as it entrains water in the film of ionic conduction 201, to accept electrons on this electrode for gas diffusion 203, so as to be re-converted to a hydrogen gas in accordance with the following formula (2):

$$2e^- + 2H_3O^+ \rightarrow H_2 + 2H_2O \qquad (2).$$

The hydrogen gas, yielded on the electrode for gas diffusion 203, cannot pass through the film of ionic conduction 201 and, moreover, the force of movement of the ions by the voltage is large, so that the hydrogen gas is gradually accumulated on the side of the electrode for gas diffusion 203, thus raising the pressure of the hydrogen gas. At this time, metal current collectors 206, 207 apply the voltage across the electrodes for gas diffusion 202, 203, while mechanically augmenting the electrodes for gas diffusion 202, 203 and ionic conduction film 201.

With the invention described in the Japanese Laying-Open Patent Publication H-5-242850, it is stated therein that the object of the invention described therein is to provide an electro-chemical gas compression apparatus having high mechanical reliability and superior electronic characteristics and which moreover is lightweight, compact and is capable of developing a large output.

That is, there is the following statement in the Japanese Laying-Open Patent Publication H-5-242850:

The conventional electro-chemical gas compression apparatus is arranged and constructed as set forth above, and the voltage applied across the electrodes for gas diffusion 202, 203 is as indicated by the following equation (3):

$$E = E_0 + (RT/2F) \times \ln(P_2/P_1) + ir \qquad (3)$$

where $E_0$ is the ionizing potential of the hydrogen gas, R is a gas constant, T is temperature, F is a Faraday constant, $P_1$ is the hydrogen gas pressure on the side of the electrode for gas diffusion 202, $P_2$ is the hydrogen

gas pressure on the side of the electrode for gas diffusion 203, i is the current and r is an electrical resistance.

As for details of the voltage applied across the electrodes 202, 203, the ionizing potential $E_0$ of the first term of the right side is 0.02 V, and the second term is the so-called Nernst's additive voltage. This additive voltage, which is determined by the gas pressure across the two electrodes 202, 203, is 0.06 V even when the gas pressure is compressed to 100 atm.

However, even with the current on the order of 400 mA/cm$^2$, the resistance of the third term is large and is 0.1V, accounting for 55% of the entire voltage. That is, the proposed compressor suffers from a drawback that the voltage efficiency of the compressor is extremely small because of the large electrical resistance of the ionic conduction 201 film.

The resistance of the film of ionic conduction 201 is that in case its thickness is approximately 0.2 mm. Thus, for reducing the electrical resistance of the film of ionic conduction 201, it is sufficient to reduce its film thickness. There is also such a method in which a sufficient quantity of moisture is supplied to the film of ionic conduction 201 to maintain the ionic conductivity of the film of ionic conduction 201. In this method, there is, however, such a problem that, when $H_3O^+$ ions migrate through the film, the moisture is thereby moved, so that, if the current is small, the moisture on the negative electrode 203 is returned back to the positive electrode 202 by reversal through the film 201, by diffusion, with the consequence that it is difficult to cause the current to flow continuously unless water is separately supplied.

For ameliorating this problem, the Japanese Laying-Open Patent Publication H-5-242850 discloses an arrangement in which a plural number of solid electrolytes exhibiting ionic conductivity and a plural number of electrodes exhibiting gas diffusion characteristics are layered alternatively to provide plural cells of a unitary structure, an arrangement in which a moisture supplying channel for supplying the moisture is provided to the gas diffusion electrodes characteristics provided between neighboring cells, and an arrangement in which an external electrical circuit is connected to the gas diffusion electrodes provided between neighboring cells to provide for variable voltages applied across plural electrodes.

With the respective apparatuses, disclosed in the above-mentioned Japanese Laying-Open Patent Publication H-5-242850, it is necessary to provide a moisture supplying channel for supplying the moisture to the gas diffusion electrode positioned between the respective unit cells, while it is also necessary to install an external pump to supply the moisture, with the consequence that the apparatus is unavoidably increased in size.

Disclosure of the Invention

It is therefore an object of the present invention to provide a novel hydrogen gas manufacturing and charging apparatus and a novel electrochemical apparatus whereby it is possible to dissolve the problem inherent to the above-described conventional apparatus.

It is another object of the present invention to provide a hydrogen gas manufacturing and charging apparatus and an electrochemical apparatus which are simple in structure, small in size and and which are able to manufacture hydrogen easily and compress/charge hydrogen efficiently.

For accomplishing the above objects, the present invention provides a hydrogen gas manufacturing and charging apparatus comprising an electrolytic unit for generating a hydrogen gas by electrolysis, a pressurizing unit for compressing the hydrogen gas evolved in the electrolytic unit, and a charging unit for charging the hydrogen gas compressed by the pressurizing unit into a hydrogen gas tank.

By having the electrolytic unit for generating the hydrogen gas on electrolysis, the hydrogen gas charging apparatus is able to manufacture the hydrogen gas readily efficiently. Moreover, by having the pressurizing unit and the charging unit, the hydrogen gas charging apparatus is able to compress and charge hydrogen efficiently.

The hydrogen gas charging apparatus of the present invention can be reduced in size and made portable, so that it can be carried by a user in person to manufacture and charge the hydrogen gas extremely readily. If the hydrogen gas tank is taken out for use, it may be used for running a variety of apparatus powered by the hydrogen gas.

It is preferred that, with the hydrogen gas manufacturing and charging apparatus according to the present invention, the pressurizing unit is made up by an electrochemical compressing unit for electrochemically compressing the hydrogen gas, and a pressurizing current controller, and the electrochemical compressing unit is made up by a first electrode for decomposing the hydrogen gas into protons ($H^+$) and a second electrode for re-converting the protons generated in the first electrode into the hydrogen gas and a proton conductor sandwiched between these electrodes, the pressurizing current controller supplying the current corresponding to the pressurizing state of the pressurizing unit to the first and second electrodes.

It is also preferred that, with the hydrogen gas manufacturing and charging apparatus according to the present invention, the electrolytic unit, pressurizing unit and the charging unit are controlled by a system controller.

Other objects, features and advantages of the present invention will become more apparent from reading the embodiments of the present invention as shown in the drawings.

Brief Description of the Drawings

Fig.1 is a schematic cross-sectional view showing a conventional electro-chemical gas compression apparatus.

Fig.2 shows a schematic structured unit showing an apparatus for manufacturing and charging a hydrogen gas according to the present invention.

Fig.3 is a schematic cross-sectional view showing a modification of an electro-chemical compressing unit.

Figs.4A and 4B show a structure of fullerene polyhydroxide as an example of a fullerene derivative used in the present invention.

Figs.5A and 5B are schematic views examples of fullerene derivatives.

Figs.6A to 6M are schematic views showing different examples of carbon clusters acting as matrices in proton conductors.

Figs.7A to 7D are schematic views showing other examples of carbon clusters.

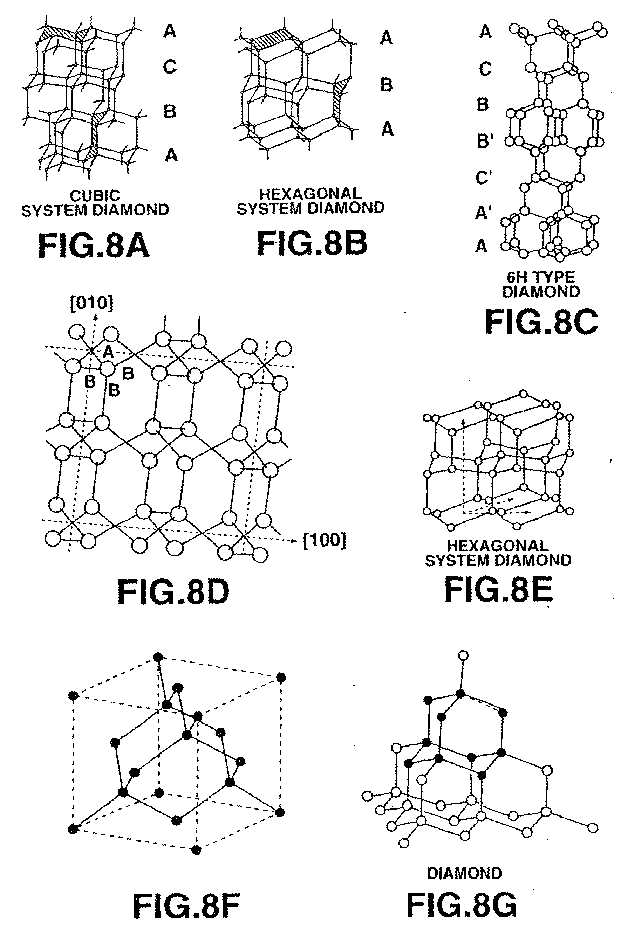

Figs.8A to 8G are schematic views showing other examples of carbon clusters (diamond structures), where Fig.8A is a schematic view showing an example of the carbon cluster which is diamond of a cubic system, Fig.8B is a schematic view showing an example of the carbon cluster which is diamond of a hexagonal system, Fig.8C is a schematic view showing an example of the carbon cluster which is diamond of a 6H type, Fig.8E is a schematic view showing an example of the carbon cluster which is diamond of a hexagonal system, and Fig.8G is a schematic view showing an example of the carbon cluster which is diamond.

Figs.9A to 9H are schematic views showing further examples of carbon clusters in which the clusters are bonded together.

Fig.10A is a perspective view showing a carbon nano-tube which proves a matrix of a proton conductor, Fig.10B is a cross-sectional view thereof, and Fig.10C is a perspective view showing a carbon fiber.

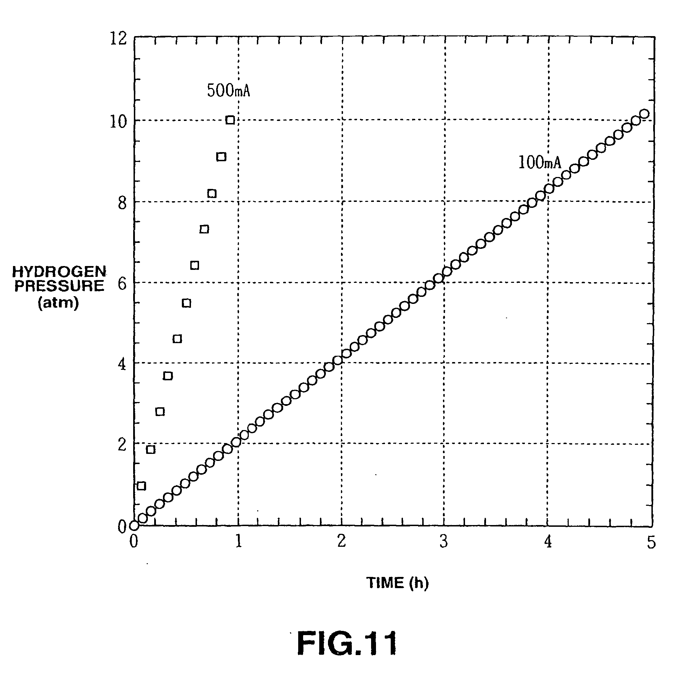

Fig.11 is a graph showing the relationship between the hydrogen gas pressure and the hydrogen gas supplying time with the hydrogen gas manufacturing and charging apparatus.

Fig.12 is a graph showing occlusion characteristics of a hydrogen gas tank employing a hydrogen gas occlusion alloy of the $LaNi_5$ system.

Fig.13 is a flowchart showing the flow of operations carried out by a system controller.

Fig.14 is a schematic view showing another example of a hydrogen gas manufacturing and charging apparatus according to the present invention.

Fig.15 is a graph showing changes in the internal pressure of a negative electrode side gas reservoir chamber when a hydrogen gas pipe for outputting the hydrogen gas to a pressurizing unit is closed.

Fig.16 shows a schematic structure of an electro-chemical apparatus according to the present invention.

Fig.17 shows a schematic structure of a fuel cell apparatus embodying the present invention.

Best Mode for Carrying out the Invention

Referring to the drawings, a hydrogen gas manufacturing and charging apparatus and an electro-chemical gas compression apparatus, according to the present invention, are explained in detail.

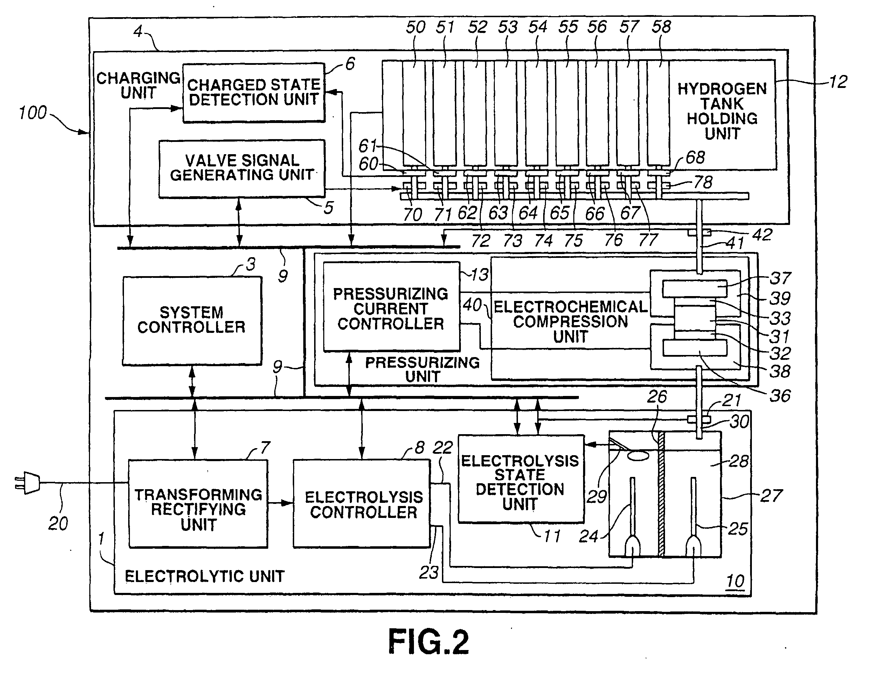

A hydrogen gas manufacturing and charging apparatus 100, according to the present invention, is roughly composed of an electrolytic unit 1, a pressurizing unit 2, a system controller 3 and a charging unit 4, as shown in Fig.2.

The electrolytic unit 1 includes a transforming rectifying unit 7, an electrolysis controller 8, an electrolytic vessel 10 and an electrolysis state detection unit 11.

An input terminal 20 of the transforming rectifying unit 7 is connected to a power supply, not shown. The power supply may be any suitable power supply, such as, for example, a commercial power supply or a power generator exploiting natural energy. As the commercial power supply, a usual home uses A.C. 100V or a larger power supply of A.C. 200V.

The transforming rectifying unit 7 is made up by a transformer, a rectifier and a smoothing capacitor, not shown, for producing a D.C. power of a voltage required for electrolysis. For these, a switching regulator, for example, is substituted in case a D.C. power supply is used as a power supply. An output end of the D.C. power of the transforming rectifying unit 7 is connected to an input end of the electrolysis controller 8.

The electrolysis controller 8 controls the amount of the hydrogen gas evolved by electrolysis, and has its control voltage output ends 22, 23 directly connected to respective electrodes 24, 25 provided to the electrolytic vessel 10.

The electrolytic vessel 10 is made up by electrodes 24, 25, a gas separating film 26, a casing 27 for holding an electrolytic solution 28, the electrolytic solution 28, a liquid level sensor 29 for sensing the surface state of the electrolytic solution and a hydrogen gas pipe 30 for conducting the hydrogen gas yielded in the electrolytic vessel 10 to the pressurizing unit 2. Meanwhile, the inside of the casing 27 is divided by a gas isolation film 26 into two spacings, such that the hydrogen gas evolved on the electrode 25 by the operation of the electrolysis is passed to the pressurizing unit 2 through the hydrogen gas pipe 30 for supplying the hydrogen gas supplied to the pressurizing unit.

The hydrogen gas pipe 30 for hydrogen supplied to the pressurizing unit includes a sensor 21 for detecting the hydrogen gas supplied to the pressurizing unit. The sensor 21 for detecting the hydrogen gas supplied to the pressurizing unit may, for example, be a pressure detecting apparatus employing a diaphragm, and converts the displacement of the diaphragm corresponding to the pressure into electrical signals.

To the electrolysis state detection unit 11 is coupled an output signal from the liquid level sensor 29 and the sensor 21 for detecting the hydrogen gas supplied to the pressurizing unit. The electrolysis state detection unit is further connected to the system controller 3 over a bus line 9.

The pressurizing unit 2 is made up by an electro-chemical compression unit 40 and a pressurizing current controller 13.

The electro-chemical compression unit 40 is made up by a gas diffusion electrode 32 of a positive electrode, as a first electrode, carrying a catalyst of e.g. platinum, a gas diffusion electrode 33 of a negative electrode, as a second electrode, carrying a catalyst of e.g. platinum, a proton conductor 31, sandwiched between these electrodes, a positive electrode side metal current collector 36, a negative electrode side metal current collector 37, a positive electrode side gas reservoir chamber 38 and a negative electrode side gas reservoir chamber 39. That is, the electro-chemical compression unit includes a multi-layered film comprised of a membrane (thin film) and electrodes (membrane and electro-assembly) in which the membranous proton conductor 31 is sandwiched between the positive electrode 32 and the negative electrode 33.

Preferably, the proton conductor 31 has a thickness of e.g. approximately 0.03 mm and includes a catalyst layer on each side thereof. By providing the catalyst layer, it is possible to improve electro-chemical decomposition of hydrogen to improve the proton yielding efficiency further.

The gas diffusion electrodes 32, 33 are preferably heat-resistant and of a surface area which is as large as possible. The gas diffusion electrodes 32, 33 may also preferably be intimately bonded over their entire surfaces to the proton conductor 31 through a catalyst carried on their surfaces and exhibit flexibility to a certain extent for bonding to the proton conductor 31. The gas diffusion electrodes 32, 33 are also preferably activated electrodes.

In light of the foregoing, the positive electrode 32 and the negative electrode 33 are porous or meshed. For example, the positive electrode and the negative electrode may each be manufactured by forming carbon fibers or porous carbon as a starting material into a sheet and by having an active catalyst carried by the surface of the sheet intimately bonded to the proton conductor 31. A net-shaped member, as a core material, obtained on knitting a metal wire, may be inserted in or bonded to the sheet-shaped electrode material. By inserting or bonding the metal core material in this manner, the electrode itself may be improved in electrical conductivity, such that uniform current distribution may be expected to be achieved over the entire electrode surface.

The catalyst is preferably fine particles of e.g. platinum, ruthenium oxide or iridium oxide. Any other suitable electrode material, such as silver, may also be used provided the targeted reaction is allowed to take place with the electrode material used.

The catalyst used may be carried on the electrodes 32, 33 by any usual method. For example, such a method may be used which consists in having a catalyst material or a precursor thereof carried on the surfaces of carbon particles and heating the resulting mass to form catalyst particles which may then be sintered on the electrode surface along with the fluorine resin. With this method, an electrode carrying no catalyst material is prepared at the outset, and a precursor of the catalyst material, such as a mixed aqueous solution of chloroplatinic acid and chlororuthenic acid, or a butyl alcohol solution, as a coating solution, is coated on the electrode surface, and the resulting mass is sintered at 200 to 350°C in a hydrogen-containing reducing atmosphere, to form a platinum-ruthenium alloy on the electrode surface.

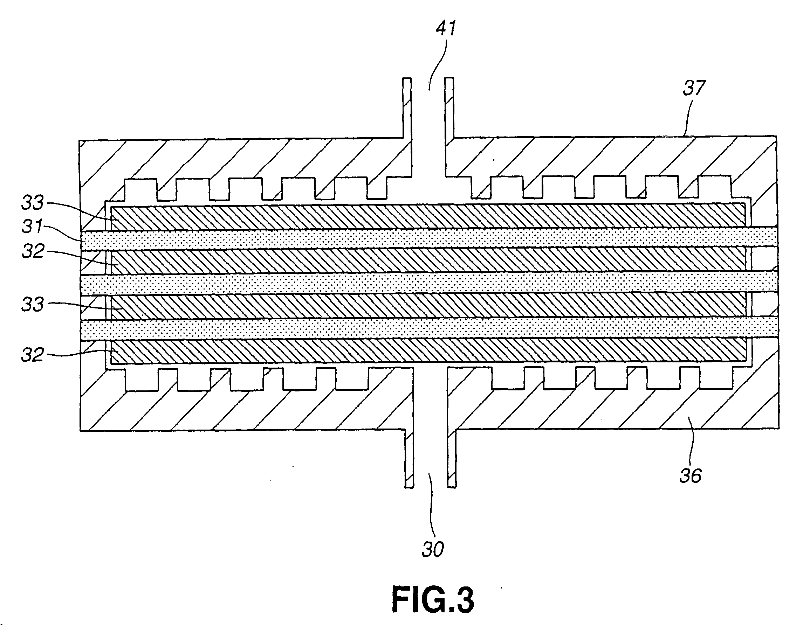

The electro-chemical compression unit 40 may also be formed by alternately forming a proton conductor and a gas diffusing electrode a number of times, as shown in Fig.3, whereby a higher compression ratio may be obtained extremely readily.

The hydrogen gas, compressed by the electro-chemical compression unit 40, is supplied through a hydrogen gas pipe 41 for outputting the hydrogen gas to the aforementioned hydrogen gas tank mounted in a hydrogen gas tank holding unit 12 in the charging unit 4. In this hydrogen gas pipe 41, there may be mounted a hydrogen gas pressure sensor 42 for detecting the pressure of the compressed hydrogen gas. The hydrogen gas pressure sensor 42 may be of the routinely used diaphragm type.

The positive electrode side gas reservoir chamber 38 and the negative electrode side gas reservoir chamber 39 may be provided with a gas discharge port, not shown, for discharging an extremely small amount of a gas at all times or at a specified timing for purging a mixed gas component other than the hydrogen gas.

The charging unit 4 is made up by a hydrogen gas tank holding unit 12, a charged state detection unit 6 and a valve signal generating unit 5. The hydrogen gas tank holding unit 12 is provided with hydrogen gas tanks 50 to 58. Although Fig. 1 shows a case wherein nine of the aforementioned hydrogen gas tanks are arranged, there is no limitation to the number of the hydrogen gas tanks, such that one or any desired plural number of the hydrogen gas tanks may be used.

The hydrogen gas tanks 50 to 58 and the and the electro-chemical compression unit 40 are interconnected through the hydrogen gas pipe 41 of the pressurizing unit 2, pressure detection units 60 to 68 and hydrogen gas valves 70 to 78. The pressure detection units 60 to 68 may be pressure detection devices, employing routinely used diaphragms, and convert the diaphragm displacement corresponding to the pressure into electrical signals.

The charged state detection unit 6 is supplied with pressure signals from the pressure detection units 60 to 68.

The hydrogen gas valves 70 to 78, controlling the flow of the hydrogen gas from the hydrogen gas pipe 41, may be configured as electro-magnetic valves producing two states, that is an opened state and a closed state, of an electro-magnetic valve.

The valve signal generating unit 5 outputs independent control signals for the respective ones of the hydrogen gas valves 70 to 78.

The hydrogen gas tanks 50 to 58 may be hollow high-pressure tanks or hydrogen gas occluding tanks.

The system controller 3 controls the hydrogen gas manufacturing and charging apparatus 100 in its entirety. The detection and control signals are exchanged between the system controller 3 and various parts bidirectionally over e.g. the bus line 9. The system controller 3 exchanges signals with the transforming rectifying unit 7, electrolysis controller 8, electrolysis state detection unit 11, pressurizing current controller 13, valve signal generating unit 5 and with the charged state detection unit 6. The system controller 3 is supplied with signals from the sensor 21 for detecting the hydrogen gas supplied to the pressurizing unit and from the hydrogen gas pressure sensor 42.

The system controller 3 may be constructed by the hardware having the calculating and logical processing functions, or may be e.g. a central processing unit (CPU) performing software processing functions.

The operation of the hydrogen gas manufacturing and charging apparatus 100, centered around the contents of the control signal generated by the system controller 3, is now explained in the order of the electrolytic unit 1, pressurizing unit 2 and the charging unit 4.

An operating button, not shown, provided on the system controller 3, is actuated, whereby the system controller 3 sends out a signal of turning on the power supply over bus line 9 to the transforming rectifying unit 7. This transforming rectifying unit 7 acquires a predetermined voltage, required by the electrolysis controller 8, from the power of the commercial power supply, and rectifies the so acquired voltage from the A.C. to the D. C.

It is noted that the manner of a timing start signal of the system controller 3 sending out an ON signal is not limited to an operator sending out an ON signal by a manual operation. For example, detection means, not shown, for detecting the mounting of a new tank in the hydrogen gas tank holding unit 12 may be provided and the power supply may be turned on based on the information from this detection means. Alternatively, in order to utilize the low cost of the electrical power of the midnight time zone, a timer, provided in the system controller 3, may be used and the power supply may be turned on based on the time information intimating that the time is now the predetermined time.

The D.C. power, generated in the transforming rectifying unit 7, is applied to the electrolysis controller 8 in order to control the electrical quantity necessary for electrolysis in this electrolysis controller 8.

The sensor 21 for detecting the hydrogen gas supplied to the pressurizing unit detects the pressure of the hydrogen gas generated in the electrolytic vessel 10, and transmits the information to the electrolysis state detection unit 11. This electrolysis state detection unit 11 receives the aforementioned information from the sensor 21, adapted for detecting the hydrogen gas supplied to the pressurizing unit, while monitoring, through the solution level sensor 29, whether or not the quantity of the electrolytic solution 28 in the casing 27 is proper.

The electrolysis state detection unit 11 sends the state of the pressure of the hydrogen gas, evolved on electrolysis, as detected by the sensor 21 for detecting the hydrogen gas supplied to the pressurizing unit, and the state of the electrolytic solution 28, to the system controller 3. When there is a predetermined quantity of the electrolytic solution 28 within the casing 27, the system controller 3 continues electrolysis and, when the quantity of the electrolytic solution 28 is not up to the predetermined quantity, the system controller discontinues electrolysis to issue an alarm to the user by an alarm mechanism, not shown.

It is desirable that the pressure of the hydrogen gas manufactured by the electrolytic vessel 10 of the electro-chemical apparatus electrolytic unit 1, and which is applied to the pressurizing unit 2, is maintained within the range of preset values, in order for the pressurizing unit 2 to operate properly. To this end, the system controller 3 sends a control signal to the electrolysis controller 8, over the bus line 9, in order that the signal level from the sensor 21 for detecting the hydrogen gas supplied to the pressurizing unit will be maintained within a predetermined range.

That is, when the pressure of the hydrogen gas, evolved on electrolysis, is low, the voltage across the ends of the electrodes 24, 25, provided to the electrolytic vessel 10, is increased to increase the current passed to the electrodes to accelerate the electrolysis.

If conversely the pressure of the hydrogen gas evolved on electrolysis is high, the voltage across the ends of the electrodes 24, 25, provided to the electrolytic vessel 10, is decreased to decrease the current passed to the electrodes to retard the electrolysis. By so doing, the pressure of the hydrogen gas, supplied to the pressurizing unit 2, may be maintained at a constant value.

Meanwhile, the electrolysis controller 8 controls the current flowing through the electrodes 24, 25, and hence may be of any desired controlling system, provided that the electrolysis controller is a constant current source which is variable in the sense that the current value may be changed as desired.

As aforesaid, the pressurizing unit 2 is made up by the electro-chemical compression unit 40 for electrochemically compressing the hydrogen gas and the pressurizing current controller 13.

On voltage application to the proton conductor 31, protons generated at the positive electrode 32 migrate within the proton conductor 31 in a direction opposite to the direction of voltage application. The migrating protons are converted into the hydrogen gas on the surface of the proton conductor 31 on the side negative electrode 33. The quantity of the hydrogen gas, thus evolved, is determined by the quantity of the current passed through the proton conductor 31, represented by the equation (3), so that, by controlling the quantity of the current passed, the hydrogen gas may be separated from the mixed gas. Thus, by providing the proton conductor 31 en route, the hydrogen gas may be improved in purity, even though the hydrogen gas is low in purity.

Thus, by controlling the evolved quantity of the hydrogen gas, it is possible to produce the hydrogen gas at a desired pressure.

The mechanism of the processing for compressing the hydrogen gas is hereinafter explained.

The hydrogen gas, sent to the positive electrode side gas reservoir chamber 38, through the hydrogen gas pipe 30 adapted for supplying the hydrogen gas to the pressurizing unit, loses electrons on the gas diffusion electrode 32, operating as a positive electrode, to generate protons in accordance with the following formula (4):

$$H_2 \rightarrow 2e^- + 2H^+ \qquad (4).$$

The protons, generated in the positive electrode 32, migrate through the proton conductor 31 to reach the gas diffusion electrode 33, operating as a negative electrode, with the voltage as a driving power, and accept electrons on the gas diffusion electrode 33, whereby the protons are re-converted into a hydrogen gas in accordance with the following formula (5):

$$2H^+ + 2e^- \rightarrow H_2 \qquad (5).$$

The hydrogen gas, generated on the negative electrode 33, cannot traverse the proton conductor 31. On the other hand, the force of movement of the ions by the voltage is large. As a result, the hydrogen gas is gradually accumulated in the negative electrode side gas reservoir chamber 39 on the side negative electrode 33, so that the pressure of the hydrogen gas is increased. At this time, the positive electrode side metal current collector 36 and the negative electrode side metal current collector 37 play the role of applying the voltage to the positive electrode 32 and to the negative electrode 33 and of mechanically reinforcing the positive electrode 32, negative electrode 33 and the proton conductor 31.

Preferably, the proton conductor is comprised of a derivative mainly composed of at least one sort of a substance selected from the group composed of a fullerene molecule, a cluster mainly composed of carbon and structured units of tubular or linear carbon, in which proton dissociating groups are introduced into the carbon atoms forming this substance. The above holds for the second and the following aspects of the present invention as now explained.

The [proton dissociating group] means a functional group from which a proton may be dissociated on electrolytic dissociation and [dissociation of a proton] means separation of a proton from the functional group on electrolytic dissociation.

There is no particular limitation to the fullerene molecule, as a matrix to which the proton dissociating groups are introduced, provided that it is a spherically-shaped cluster molecule. However, the fullerene molecule selected from among $C_{36}$, $C_{60}$, $C_{70}$, $C_{76}$, $C_{78}$, $C_{80}$, $C_{82}$, $C_{84}$, $C_{86}$, $C_{88}$, $C_{90}$, $C_{92}$, $C_{94}$ and $C_{96}$, or a mixture of two or more of these fullerene molecules, are usually preferred.

These fullerene molecules were found in 1985 from the spectrum of the mass analysis of a cluster beam on laser ablation of carbon (Kroto, H.W.; Heath, J.R.; O=Brien, S.C.; Curl, R.F.; Smalley, R.E. Nature 1985. 318, 162). The manufacturing method was actually established five years later. That is, a manufacturing method by arc discharge of a carbon electrode was found in 1990. Since that time, fullerene stirred up notice as being a carbonaceous semiconductor material.

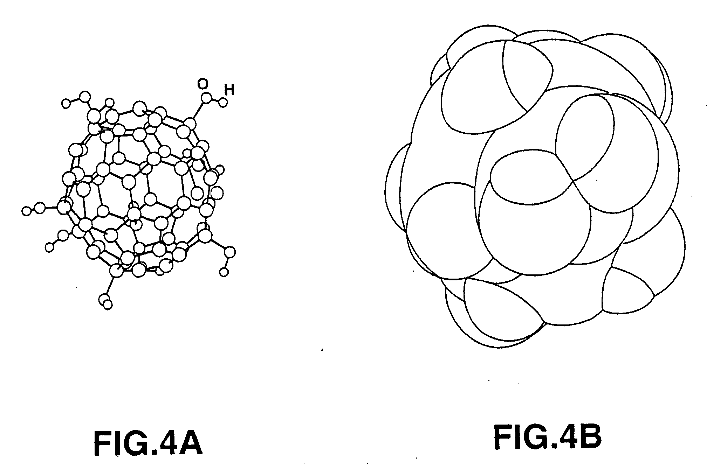

Referring to Figs.4A and 4B, a report of a synthesis example of fullerenol having a structure composed of a fullerene molecule with plural hydroxyl groups attached thereto $C_{60}(OH)_{12}$ was first made by Chiang et al. in 1992 (Chiang, L.Y.; Swirczewski, J.W.; Hsu, C.S.; Chowdhury, S.K.; Cameron, S.; Creegan, K., J. Chem. Soc. Chem. Commun. 1992, 1791).

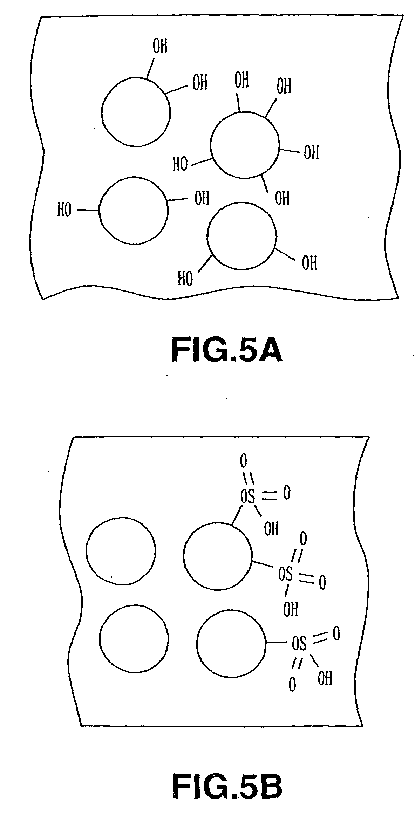

The present inventors have formed this fullerenol into an aggregate, as schematically shown in Fig. 5A, such that an intereaction will be produced between neighboring fullerenol molecules, shown by " in the drawing. The present inventors have been the first to acquire the information that the aggregate thus formed exhibits high protonic conduction characteristics as a macro-sized flocculated mass, in other words, the properties of dissociating $H^+$ from the phenolic hydroxyl group of the fullerene molecule.

According to the present invention, not only fullerenol but also a fullerene aggregate having plural $BOSO_3H$ groups may be used as an ionic conductor. A report on fullerene polyhydroxide, that is fullerenol as a hydrogen sulfate ester, in which an $OSO_3H$ group is sub-

stituted for an OH group, as shown in Fig.5B, was made again by Chiang et al in 1994 (Chiang, L.Y.; Wang, L.Y.; Swirczewsky, J.W.; Soled, S., Cameron, S., J. Org. Chem. 1994, 59, 3960). It is possible for fullerene in the form of the hydrogen sulfate ester, to contain only an $OSO_3H$ group in one molecule, or to contain a plural number of these groups and a plural number of hydroxyl groups.

The protonic conductivity exhibited by an aggregate of a large number of fullerenol molecules and a large number of molecules of fullerenol in the form of the hydrogen sulfate ester, as a bulk, can be continuously utilized, even in a low temperature atmosphere, because the large quantity of hydroxyl groups contained from the outset in the molecules, or protons derived from the $OSO_3H$ groups, directly take part in the migration.

It may be conjectured that fullerene as the matrix of the molecule exhibits electrophilicity, which fact significantly contributes to accelerated electrolytic dissociation of hydrogen ions not only in $OSO_3H$ groups exhibiting high acidity, but also in hydroxyl groups, thus accounting for excellent proton conductivity. Moreover, since a fairly large amount of the hydroxyl groups and $OSO_3H$ groups can be introduced into one fullerene molecule, the number density per unit volume of the proton conductor taking part in conduction is extremely high, thus achieving a substantially high rate of conduction.

Since the major portions of fullerenol and fullerenol in the form of a hydrogen sulfate ester are formed by carbon atoms of fullerene, fullerenol and fullerenol in the form of a hydrogen sulfate ester are lightweight and scarcely transmuted, while being free of pollutants. Moreover, the manufacturing cost of fullerene is deceasing rapidly. From the perspective of resources, environment and cost, fullerene may be thought of as being a near-ideal carbonaceous material as compared to any other materials.

The proton dissociating groups need not be limited to the aforementioned hydroxyl or $OSO_3H$ groups. Thus, it is sufficient if this dissociating group is represented by a formula BXH, where X is an optional bivalent atom or atomic group, or if the dissociating group is represented by a formula BOH or BYOH, where Y is an optional bivalent atom or atomic group. It is specifically sufficient that this proton dissociating group is one of BCOOH, $BSO_3H$, $BOPO(OH)_2$ or $BC_6C_4BSO_3H$, in addition to BOH and $BOSO_3H$.

For synthesizing e.g. fullerenol, usable for the present invention, particles of fullerene molecules are subjected to known processing, such as acidic processing or hydrolysis, in any suitable combination, for introducing desired groups into constituent carbon groups of the fullerene molecules. The so produced fullerene derivative may be formed into a membranous form, by coating or vapor deposition, for use as the proton conductor 31 in the electro-chemical compression unit 40. The proton conductor 31 may substantially be formed only of the aforementioned fullerene derivative, which may also be bound together by a binder.

When the proton conductor 31 is formed only of the aforementioned fullerene derivative, the fullerene derivative may be molded under pressure application to form a membranous proton conductor, which may then be used as the proton conductor 31. If the fullerene derivative, bound together by the binder, is used as the proton conductor 31, the proton conductor exhibiting sufficient strength may be obtained by virtue of the binder used.

The high molecular material, usable as the binder, may be one or plural known polymer materials exhibiting film-forming properties. The proton conductor of this type exhibits proton conductivity comparable to that of the proton conductor formed only of the fullerene derivative. Moreover, in contradistinction from the proton conductor formed only of the fullerene derivative, the proton conductor of the bound type is donated with film forming properties derived from the high molecular material and, as compared to the powder compression molded product of the fullerene derivative, the proton conductor of the bound type may be used as a flaccid proton conductor 31 of a thickness usually 300 Fm or less, exhibiting superior strength and gas transmission prohibiting properties.

There is no particular limitation to the high molecular material, provided that the material obstructs proton conductivity (by reaction with a fullerene derivative) to the least extent possible, and exhibits film-forming properties. Usually, such a high molecular material which does not exhibit electronic conductivity and exhibits satisfactory stability may be used. Specified examples of the desirable high molecular materials include polyfluoroethylene, polyvinylidene fluoride and polyvinyl alcohol, which are also desirable form the following reason:

First, polytetrafluoroethylene is desirable because a thin film with a higher strength may readily be formed with a minor blending quantity thereof as compared to other high molecular materials. The low blending ratio in this case of not higher than 3 wt% and preferably 0.5 to 1.5 wt% suffices, while the thickness of the thin film may usually be as thin as 100 Fm to 1 Fm. The reason that polyvinylidene fluoride or polyvinyl alcohol is desirable is that it permits production of a proton conducting thin film having a superior gas transmission preventative performance. The blending ratio of polyvinylidene fluoride or polyvinyl alcohol is preferably 5 to 15 wt%. The blending ratio of polyvinylidene fluoride or polyvinyl alcohol lower than the lower limit of the above range tends to affect film forming properties.

For producing a thin film of the proton conductor in which each fullerene derivative used in the present invention is bound with the binder, any suitable known film-forming method, including the pressure molding or the extrusion molding, first and foremost, may be used.

Meanwhile, in the hydrogen gas manufacturing and charging apparatus according to the present invention, the electrodes 32, 33 and the fullerene derivative as the proton conductor 31 are each desirably in the form of a flexible sheet exhibiting sufficient physical strength from the viewpoint of handling and size reduction.

Since the electro-chemical compression unit 40 is able to operate satisfactorily in atmospheric air, hydrogen can be compressed efficiently without the necessity of adjusting the pressure, temperature or humidity at the time of hydrogen compression.

According to the present invention, the fullerene derivative, obtained on introducing a proton dissociating group to a carbon atom, forming a fullerene molecule of e.g., fullerenol, is used as a constituent material of the proton conductor 31, so that, in contradistinction from a case where Nation as $H_3O^+$ ion conductor is used, the electro-chemical compression unit may be run even in atmospheric air of a low humidity, even in the absence of a humidifying device. That is, since the hydrogen can be compressed in atmospheric air of low humidity, the initial operation at the time of hydrogen compression may be quickened without much time being taken until the state of the steady operation is achieved. Although a humidifying device may be provided to compress hydrogen in similar manner in the presence of moisture, this does not constitute a requirement of the present invention.

If Nafion as the $H_3O^+$ ion conductor is used, not only is the hydrogen compressed, but also water is yielded, and hence a dehumidifying device is needed. In the present embodiment, the hydrogen gas is supplied for electrolysis to the positive electrode 32 so as to yield the proton which is moved through the proton conductor 31 of e.g. fullerenol to the negative electrode 33 where the proton is converted to hydrogen and subjected to compression. Thus, the hydrogen gas may be compressed even in the absence of a dehumidifying device. Moreover, electrochemical compression may be carried out efficiently without the necessity of the humidifying processing, the content of moisture of the compressed hydrogen gas is small. This renders the dehumidifying process of the post-process unnecessary so that the hydrogen gas may directly be routed to the charging unit 4. Thus, the electro-chemical compression unit 40 is able to compress the hydrogen gas efficiently, such that the hydrogen gas manufacturing and charging apparatus proves a more compact general-purpose apparatus.

According to the present invention, a cluster derivative obtained on producing a cluster formed by carbon powders, by e.g. an arc discharge method of a carbonaceous electrode, and on introducing proton ($H^+$) dissociating groups into the carbon powders through e. g. acidic processing of the carbon powders, may be used as the proton conductor in place of the fullerene derivative. The cluster means a flocculated mass formed on linkage or cohesion of several to hundreds of atoms. This flocculated mass or aggregate improves the proton conducting performance and keeps chemical properties to assure sufficient film strength as well as more facilitated layering. The cluster, mainly composed of carbon, is an aggregate of several to hundreds of carbon atoms, irrespective of the type of the carbon-carbon bond. The cluster is not necessarily formed solely by a 100% carbon cluster such that other atoms may also co-exist. The flocculated mass, the major portion of which is made up by carbon atoms, is termed a carbon cluster, so as to encompass this co-existing state.

The aforementioned proton conductor is mainly composed of the carbon cluster as a matrix to which proton dissociating groups are introduced. Thus, the proton conductor exhibits the properties analogous to those of the proton conductor, including the protonic conductivity first and foremost. Moreover, a large variety of carbonaceous materials are included in the category of the carbon cluster, thus assuring a wide latitude of selection of the carbonaceous materials. The reason the carbon cluster is used as the matrix is that a large quantity of proton dissociating groups need to be introduced for imparting satisfactory proton conductivity, which becomes possible with the carbon cluster. In this case, the acidity of the solid proton conductor is appreciably increased. However, in distinction from other common carbonaceous material, the carbon cluster is scarcely deteriorated on oxidation and is superior in durability, while the component atoms are bound together intimately, so that, if the acidity is high, the interatomic linkage is not lost, that is, chemical changes are scarcely produced, with the result that the film structure may be maintained.

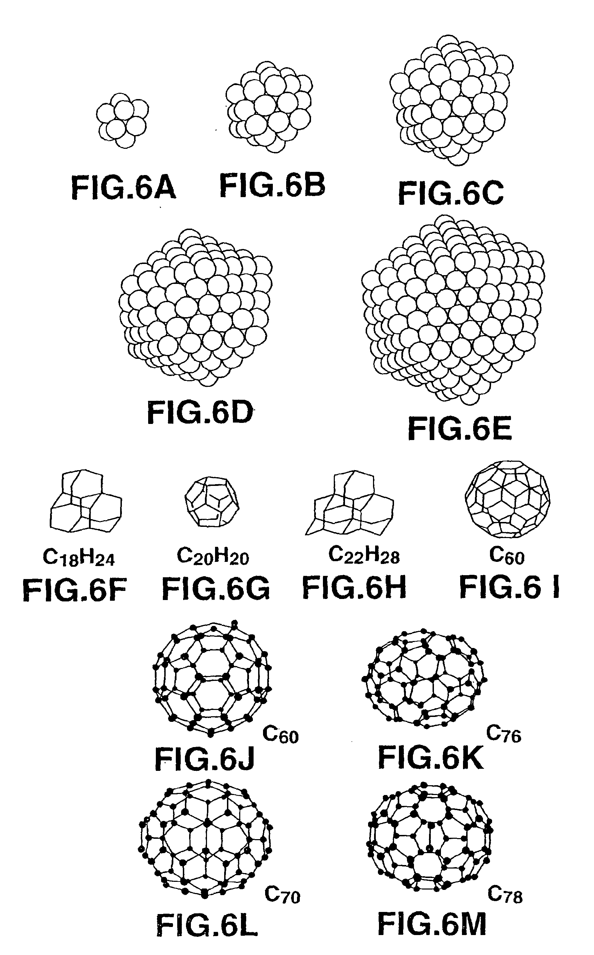

The proton conductor described above may exhibit high protonic conductivity, even in a dried state. There are a large variety of the proton conductors, as shown for example in Figs.6 to 9 to provide for a wide latitude of selection as the feedstock for the proton conductors.

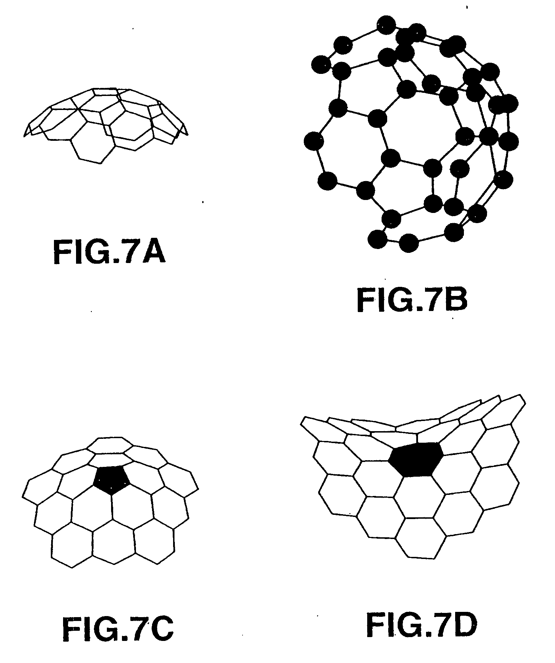

First, the proton conductors, shown in Figs.6A to 6M are a variety of carbon clusters, composed of a large number of carbon atoms and which are spherical, spheroidal or a similar shape presenting a closed face structure. In these figures, molecular fullerene is also shown. Figs.7A to 7D show carbon clusters the spherical structure of which are partially lacking. These carbon clusters are featured by the presence of open ends in the structures thereof. These carbon clusters may be frequently seen as by-products in the production process of fullerene by arc discharge.

In Figs.7C to 7D, the portions daubed all-over with black indicate five- or heptagonal rings.

The carbon clusters, the major portions of the carbon atoms of which are bonded by SP3 linkage, prove various clusters having the diamond structure shown in Figs.8A to 8G.

The cluster, the major portions of the carbon atoms of which are bonded by SP2 linkage, has a graphitic planar structure, or a structure of part or all of fullerene or the nano-tube. Of these, many carbon clusters having the graphitic structure exhibit electron conductivity and hence is not desirable as the matrix of the proton conductor. Conversely, the SP2 linkage of the fullerene or nano-tubes partially include the element of the SP3 linkage and hence does not exhibit electron conductivity in a majority of cases. Thus, the fullerene or nano-tube is desirable as the matrix of the proton conductor.

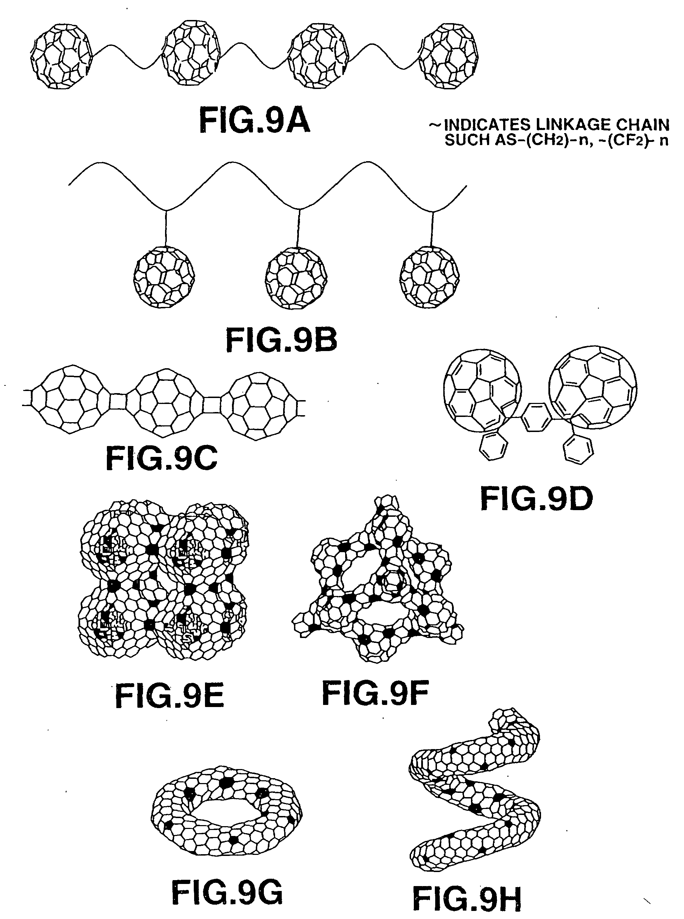

Figs.9A to 9H show a variety of structures in which the clusters are bonded to one another. These structures may be used in the present invention.

In Figs.9A to 9H, the portions daubed all-over with black indicate five- or heptagonal rings.

In the present invention, it is necessary to introduce the aforementioned proton dissociating groups into the carbon atoms forming the carbon cluster. For introducing the proton dissociating groups, the following manufacturing method may preferably be used.

First, a carbon cluster, formed by carbon powders, is produced by arc discharge of carbonaceous electrodes. This carbon cluster is acid-processed, using e.g. sulfuric acid, further hydrolyzed, further sulfonated or esterified with phosphoric acid, whereby a carbon cluster derivative as a targeted product may readily be produced. This carbon cluster derivative may directly be molded under pressure application to a membrane or to a pellet, without using a binder. With the carbon cluster of the present invention, as a matrix, the length of the long axis is preferably 100 nm or less, and more preferably 100D or less, while the number of the aforementioned groups, introduced to the carbon cluster, is desirably 2 or more.

As the carbon cluster, such a structured unit is desirable which has an open end in the basket-shaped structured unit, such as fullerene, or at least in a portion thereof. The fullerene of this defective structure exhibits the reactivity proper to fullerene, while the defective structure or the open structure exhibits a higher reactivity. Thus, the acid processing helps introduce proton dissociating substituents to achieve a higher substituent introducing rate and a higher proton conductivity. Moreover, such fullerene of a defective structure can be synthesized at a lower cost in larger quantities than the normal fullerene.

It is also desirable to use a structured unit of tubular or linear carbon as the matrix of the proton conductor used in the present invention. The structured unit of the tubular carbon is desirably tube-shaped, such as carbon nano-tube. On the other hand, the structured unit of the tubular carbon is desirably a fiber-shaped structured unit, such as carbon fibers.

The carbon nano-tubes or carbon fibers are more liable to emit electrons, by reason of their structure, and can be appreciably increased in surface area, thus further improving the proton propagation efficiency.

The carbon nano-tubes or carbon fibers, that may preferably be used, may be manufactured by an arc discharge method or a chemical vapor deposition (thermal CVD). With the arc discharge method, carbon may be deposited in the form of a cloth on the inner wall of a chamber by arc discharge by synthesis in a He atmosphere of e.g. 150 Torr, using an arc discharge chamber and metal catalysts, such as FeS, Ni or Co, to produce carbon nano-tubes. If the catalyst is used simultaneously, carbon nano-tubes of a finer diameter may be produced. On the contrary, if the arc discharge is carried out in the absence of a catalyst, carbon nano-tubes of a larger diameter may be produced.

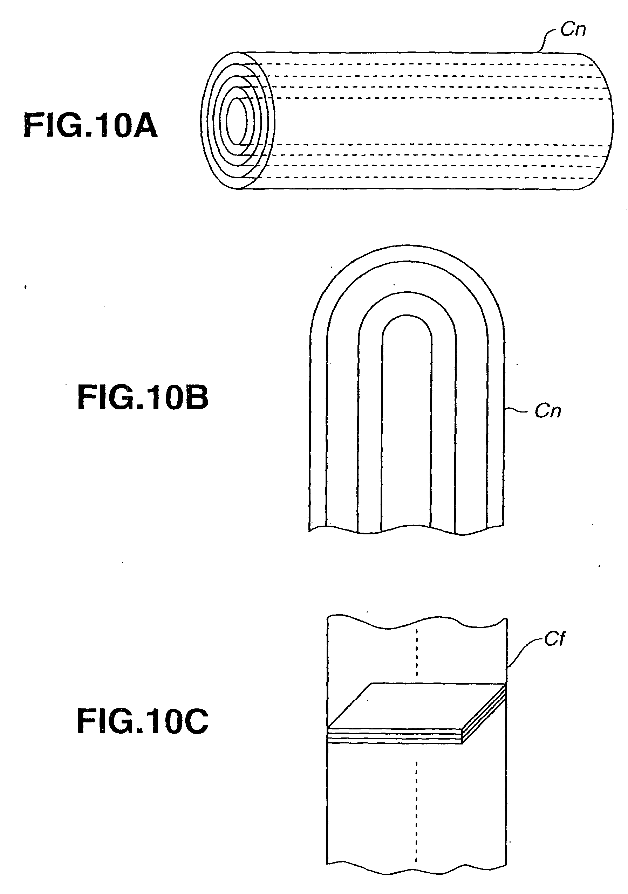

The carbon nano-tubes Cn can be produced by arc discharge in the absence of a catalyst, as discussed above. The graphene structure of the multi-layered carbon nano-tubes, shown in the perspective view of Fig.10A and in the fragmentary cross-sectional view of Fig.10B (cylindrical structure) is a defect-free high-quality carbon nano-tube Cn, and is known to be of an extremely high performance as being an electron emitting material.

It is possible to introduce proton dissociating groups into carbon nano-tubes Cn, obtained by the arc discharge method, whereby a proton conductor having superior protonic conductivity even in a dried state may be obtained.

The chemical gas-phase growth method is a technique of reacting transition metals in a finely divided form with hydrocarbons, such as acetylene, benzene or ethylene, or CO, to synthesize carbon nano-tubes Cn or the carbon fiber Cf. The carbon nano-tubes Cn or the carbon fibers Cf are deposited on the substrate by reacting a substrate of a transition metal or a substrate coated with a transition metal with the hydrocarbon gas or with Co gas.

For example, a Ni substrate may be placed in an alumina tube, heated to 700EC, and reacted with a toluene/$H_2$ gas (such as 100 sccm) to synthesize the carbon fiber Cf, having a structure shown in a perspective view of Fig.10C.

It is preferred that the aspect ratio of the carbon nano-tube Cn is 1:1000 to 1:10, while that of the carbon fiber Cf is 1:5000 to 1:10. It is also preferred that the diameter of the structured unit of the tubular or linear carbon is 0.01 to 0.5 Fm, while the length thereof is 1 to 5 Fm.

The pressurizing current controller 13 generates a voltage applied to the positive electrode side metal current collector 36 and to the negative electrode side metal current collector 37. It is noted that the higher the voltage generated by the pressurizing current controller 13, the higher is the pressure of the hydrogen gas in the negative electrode side gas reservoir chamber 39, as indicated by the above equation (3). An electro-chemical compression unit 40 in which fullerenol is used as the proton conductor 31 and in which the surface area of the MEA film was set to 12cm H 12cm, was prepared. A hydrogen gas was supplied to the surface of the positive electrode at a rate of 50 ml/min, and measurement was made of the time until the hydrogen gas pressure was raised to 10 atm, using the sensor for detecting the pressure of the hydrogen gas routed to the pressurizing unit. It was found that, for preserving the hydrogen gas under a condition of a 100 mA electrode current and under a condition of a 500 mA electrode current, the hydrogen gas pressure was raised in one hour to 10 atm in five hours and in one hour, respectively. The hydrogen gas pressure rising rate was proportional to the current intensity.

The theoretical value of the quantity of protons which have traversed the proton conductor 31 may be calculated, based on the current that has passed through the proton conductor 31, under the assumption that the totality of the current passed through the proton conductor 31 is by proton migration. Thus, from the Faraday=s law, the theoretical molar quantity m of the preserved hydrogen gas may be represented by the current I integrated over time t, as shown by the following equation (6):

$$m = I \times t/2F \qquad (6)$$

where F is the Faraday's constant.

The measured value of the transmitted hydrogen gas quantity and the theoretical value thereof, as calculated using the equation (6), were compared to each other. It was now found that the proton conductor 31 in which fullerenol was used had a current efficiency approximate to 100%. The measured value of the quantity of the protons which has traversed the proton conductor 31 substantially coincided with the theoretical value of the transmitted quantity of the protons as calculated from the current value.

Thus, by monitoring the values of the hydrogen gas pressure sensor 42 for detecting the pressure of hydrogen output from the pressurizing unit and the sensor 21 for detecting the hydrogen gas supplied to the pressurizing unit to control the voltage generated by the pressurizing current controller 13, it is possible to raise the hydrogen gas pressure to an optional value.

In general, the higher the hydrogen gas pressure, the higher becomes the quantity of the hydrogen gas accumulated in the hydrogen gas tank in the charging unit 4. Thus, a higher pressurizing rate is preferred. If however the pressure is excessive, a larger pressure is applied to the proton conductor 31, thus raising a problem in connection with the pressure resistance of the proton conductor 31. It is therefore desirable to manage control to maintain a desirable pressurizing state at all times. The desirable state is such a one in which the pressure applied to the proton conductor 31 is controlled to be a value not larger than a preset value necessary for the charging unit 4 to be in operation.

The specified controlling method is hereinafter explained.

Since the hydrogen gas pipe 41 for outputting the hydrogen gas to the pressurizing unit is connected to the negative electrode side gas reservoir chamber 39, the pressure in the hydrogen gas pipe 41 for outputting the hydrogen gas to the pressurizing unit is equal to that in the negative electrode side gas reservoir chamber 39, so that this pressure may be detected by the hydrogen gas pressure sensor 42 for detecting the hydrogen gas pressure output from the pressurizing unit.

Since it is the difference between the pressure detected by the sensor 42 for detecting the hydrogen gas pressure routed from the pressurizing unit and that detected by the sensor 21 for detecting the hydrogen gas supplied to the pressurizing unit, that is applied to the proton conductor 31, the voltage generated by the pressurizing current controller 13 needs to be controlled to maintain the pressure applied to both surfaces of the proton conductor 31 to less than a preset pressure in order to protect the proton conductor 31. For example, the atmospheric pressure applied to both sides of the proton conductor 31 is desirably kept to be 10 atm or less.

It is also necessary to manage control to maintain the pressure indicated by the hydrogen gas pressure sensor 42 in a predetermined range, as the pressure applied to both sides of the proton conductor 31 is supervised, as described above. These control operations are all executed by the system controller 3.

This system controller 3 is responsive to the signals applied from the sensor 21 for detecting the hydrogen gas supplied to the pressurizing unit and the hydrogen gas pressure sensor 42, connected to the bus line 9, to calculate the difference between the pressure detected by the sensor 42 for detecting the hydrogen gas pressure output from the pressurizing unit and the pressure detected by the sensor 21 for detecting the hydrogen gas supplied to the pressurizing unit, in order to control the pressurizing current controller 13 over the bus line 9.

The operation in the charging unit 4 is now explained.

In the charging unit 4, the pressure detection units 60 to 68 and the hydrogen gas valves 70 to 78 are severally provided in association with the hydrogen gas tanks 50 to 58. It is not mandatory to provide the totality of the hydrogen gas tanks 50 to 58 at all times but it is only necessary to provide a desired number of the hydrogen gas tanks in the holder 12.

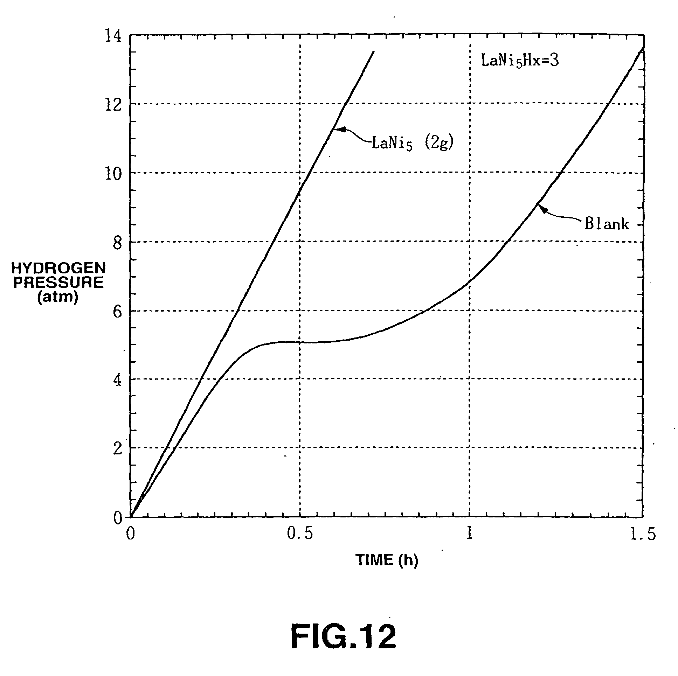

For preserving the compressed hydrogen gas in the hydrogen gas tanks 50 to 58, the hydrogen gas may be charged into plural tanks simultaneously or sequentially. If tank characteristics differ from one hydrogen gas tank to another, it is necessary to control the charging pressure from tank to tank. Fig.12 shows occlusion characteristics of the hydrogen gas tank employing the hydrogen occlusion alloys of the $LaNi_5$ system.

The hydrogen gas tanks 50 to 58 may be controlled in the following manner.

If only the hydrogen gas tank 50 is to be charged with the hydrogen gas, only the hydrogen gas valve 70 associated with the hydrogen gas tank 50 is opened, while the remaining hydrogen gas valves 71 to 78 are all closed. A predetermined current then is passed through the pressurizing current controller 13 to execute a pressurizing operation until the value of the pressure detection unit 60 is equal to a preset pressure which differs from one hydrogen gas tank to another, as long as the difference between the pressure detected by the hydrogen gas pressure sensor 42 and the pressure detected by the sensor 21 is within a preset pressure value. For example, the preset pressure may be set to 10 atm in relationship to the hydrogen gas tank characteristics.

After the pressure detection unit 60 has reached the preset pressure value, the hydrogen gas valve 70 is closed, and the valve associated with the tank which has preserved the hydrogen gas is opened. In this manner, the hydrogen gas tanks may be charged sequentially.

If there is only one hydrogen gas tank, the operation of the pressurizing unit 2 may be halted, while the valve of the hydrogen gas tank may be closed at the same time as the operation of the pressurizing unit 2 is halted, in order to prevent destruction of the proton conductor 31, by way of completing the charging operation.

The control signals for the above sequence of operations are calculated and sent by the system controller 3. Specifically, a tank pressure signal from the pressure detection unit 60 is sent to the charged state detection unit 6. The tank pressure signal is also sent to the system controller 3. This system controller 3 then calculates whether or not the tank pressure signal has reached a pressure predetermined from tank to tank. If the tank pressure is not up to the predetermined value, the system controller sends a signal for keeping the closed state of the hydrogen gas valve 70 to the valve signal generating unit 5 over bus line 9. The valve signal generating unit 5 then controls the hydrogen gas valve 70 to remain closed. When the tank pressure has reached a predetermined value, the system controller sends a signal for setting the closed state of the hydrogen gas valve 70 to the valve signal generating unit 5 over bus line 9. This valve signal generating unit 5 then controls the hydrogen gas valve 70 to its closed state.

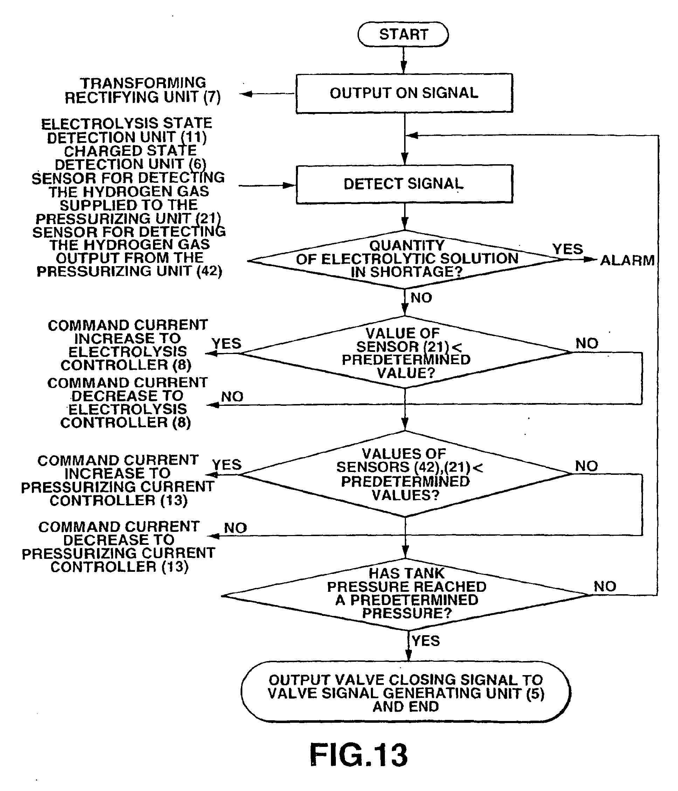

Fig.13 shows the flow of the operations performed by the system controller 3.

The hydrogen gas manufacturing and charging apparatus according to the present invention compresses the low pressure hydrogen gas, generated in the electrolytic vessel 10, by the pressurizing unit 2, to charge the gas in a pressurized state to the hydrogen gas tanks 50 to 58. Thus, only low pressure resistance characteristics of the casing 27 of the electrolytic vessel 10 suffices, so that it is possible to reduce the size and the weight of the electrolytic vessel 10, which hitherto had to be increased in order to hold a large quantity of the electrolytic solution 28. There is also a favorable effect that, even if oxygen generated simultaneously with the hydrogen gas on electrolysis is transmitted through the gas isolation film 26 and mixed into the hydrogen gas, only the hydrogen gas may be separated and taken out by the operation of the proton conductor 31.

Since the proton conductor 31 is made up by a derivative mainly composed of at least one substance selected from the group consisting of fullerene molecules, a cluster mainly composed of carbon and a structured unit made up by tubular or linear carbon, and a proton dissociating group introduced into a carbon atom forming this substance, there is no necessity for humidification and hence there is no necessity for providing a humidifier. Moreover, the operation of performing a dehumidifying process prior to charging into the hydrogen gas tank, whilst a dehumidifier for preventing the alloy of the hydrogen gas tank from being deteriorated by oxidation is not needed, thus enabling the apparatus to be reduced in size.

The present invention is directed to a hydrogen gas manufacturing and charging apparatus including a hydrogen gas pressurizing unit, composed of an electrochemical compression unit, having a first electrode arranged on the side supplying water in the state of steam or a gas for yielding a proton from water, a second electrode for converting the proton into a hydrogen gas to compress the hydrogen gas, and a proton conductor sandwiched between these two electrodes, and a pressurizing current controller for supplying the current corresponding to the pressurizing state of the electrochemical compression unit to the first and second electrodes. The hydrogen gas manufacturing and charging apparatus also includes a charging unit for charging the compressed hydrogen gas into a hydrogen gas tank.

With the hydrogen gas manufacturing and charging apparatus according to the present invention, water in supplied to the first electrode in the form of steam or a gas to yield a proton, which then is moved to the second electrode through the proton conductor, so that the hydrogen gas may be manufactured and compressed easily efficiently, and hence a large quantity of hydrogen may be manufactured and compressed. Since this hydrogen gas manufacturing and charging apparatus may be of a small size and portable, such an apparatus may be provided which may be carried about by a user in person for manufacturing and charging the hydrogen gas extremely readily. The hydrogen gas tank may be taken out from the hydrogen gas manufacturing and charging apparatus according to the present invention for use in running a large variety of equipment powered by the hydrogen gas.

Additionally, with the hydrogen gas manufacturing and charging apparatus according to the present invention, in which a hydrogen gas is obtained from the moisture in air and charged in a compressed state in the hydrogen gas tank, the maintenance operations for the electrolytic solution for electrolysis may be dispensed with. Moreover, if the power needed for running the apparatus is acquired from the natural energy, the hydrogen gas manufacturing and charging apparatus may be run semi-permanently without maintenance operations.

With the hydrogen gas manufacturing and charging apparatus of the present invention, it is preferred that the surface of the first electrode not intimately contacted with the proton conductor is contacted with steam or steam-containing atmospheric air, and that the hydrogen gas is generated and compressed on the second electrode.

With a modification of the hydrogen gas manufacturing and charging apparatus of the present invention, it is preferred that the hydrogen gas pressurizing unit and the charging unit are controlled by the system controller, there is provided a hydrogen gas pressure detection means for detecting the hydrogen gas pressure on the hydrogen gas outputting side of the pressurizing unit, and that, when the signal from the hydrogen gas pressure detection means has indicated a predetermined pressure, the operation of the pressurizing unit is halted or the hydrogen gas tank to be charged with the hydrogen gas is switched to another tank.

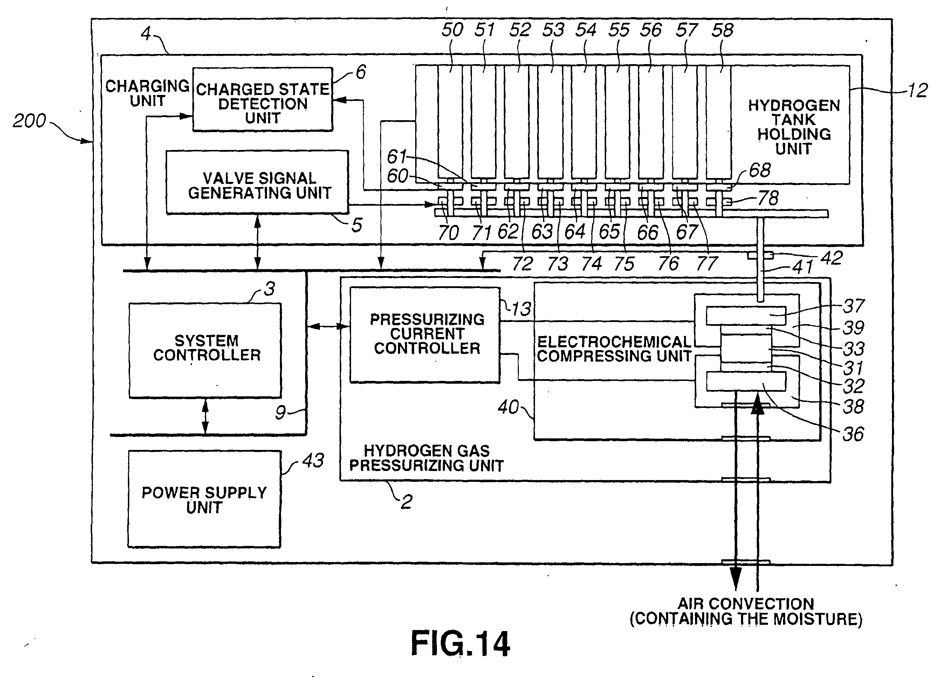

Fig.14 depicts a schematic structure of this modification of the hydrogen gas manufacturing and charging apparatus of the present invention. In contradistinction from the above-described hydrogen gas manufacturing and charging apparatus, the present hydrogen gas manufacturing and charging apparatus directly takes out the hydrogen gas from the moisture in air, compresses the so taken out hydrogen gas to charge the so compressed hydrogen gas into the hydrogen gas tank without the intermediary of the electrolytic process by the dedicated electrolytic vessel.

This hydrogen gas manufacturing and charging apparatus 200, shown in Fig.14, is now explained. The parts or components having the same structure and operation as those of the hydrogen gas manufacturing and charging apparatus shown in Fig.2 are indicated by the same reference numerals and the corresponding description is omitted for simplicity.

The positive electrode side gas reservoir chamber 38 is opened to air such that air carrying the moisture is circulated by convection therethrough at all times. This air convection may be promoted by providing e.g. a fan as necessary.

A power supply unit 43 is responsible for supplying the power to the entire apparatus. The power supply device may e.g. be a commercial power supply. If the apparatus is used outdoors, the power supply unit may be a battery or a combination of the battery and the solar power generating unit.

The operating principle of the hydrogen gas manufacturing and charging apparatus 200 of the present invention is now explained in conjunction with actually measured values.

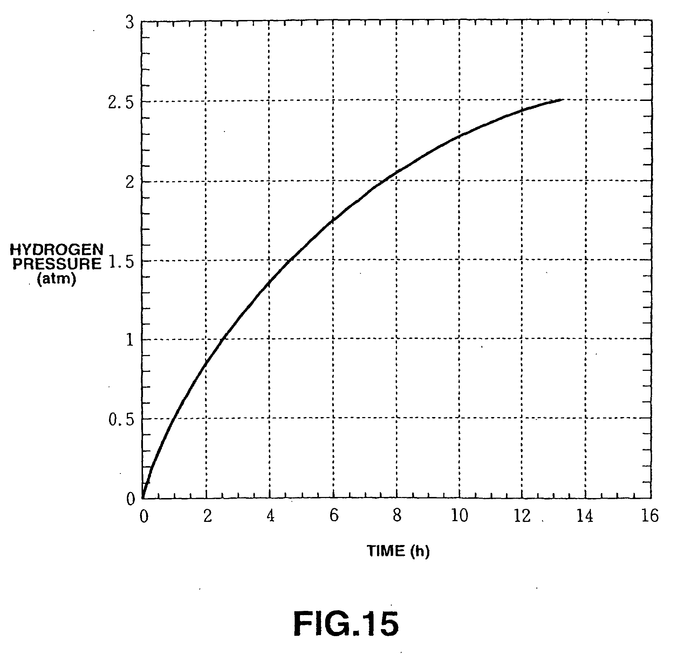

The current of 12 mA was passed through a positive electrode 32 and a negative electrode 33, in an atmosphere with the humidity of 70%, as air with humidity of 50% was supplied to the surface of the positive electrode side electrode 32 at a rate of 50 ml/min. On the surface of the positive electrode 32, water is decomposed into oxygen and proton, with the proton being transported towards the negative electrode 33 under the effect of the applied voltage. The proton which has received electrons on the negative electrode 33 is re-converted into a hydrogen gas, which is preserved in the negative electrode side gas reservoir chamber 39 to raise the internal pressure. Fig.15 shows measured results of the internal pressure of the negative electrode side gas reservoir chamber 39 when the hydrogen gas pipe 41 for outputting the hydrogen gas to the pressurizing unit is closed.

As may be seen from Fig.15, the pressure of the hydrogen gas manufactured on decomposition of water increased to 2.5 atm in twelve hours. Since the capacity of the negative electrode side gas reservoir chamber 39, in which the hydrogen gas has been compressed, is 24 ml, the compressed hydrogen gas of 60 ml was preserved therein. If the hydrogen gas pipe 41 for outputting the hydrogen gas to the pressurizing unit is in an opened state, the hydrogen gas is charged into one of the hydrogen gas tanks 50 to 58, for example, into the hydrogen gas tank 50. Except if the humidity is 0%, the higher the humidity, the more is theoretically the quantity of the manufactured hydrogen gas.

On detection by the charged state detection unit 6 that the pressure in the hydrogen gas tank 50 has reached a predetermined value, and that the charging has come to a close, the operation of electrolysis and pressurizing for charging is discontinued and, based on a signal from the valve signal generating unit 5, the hydrogen gas valve 70 provided on the hydrogen gas tank side is closed. This completes the charging operation.

With the hydrogen gas manufacturing and charging apparatus according to the present invention, hydrogen may be manufactured from steam or from the steam-containing atmospheric air, while the electrolytic solution is not used, so that maintenance is unneeded. If the power of the electrical unit, such as the controller, is supplied from the natural energy, such as by solar power generation or wind power generation, the hydrogen gas can be continuously supplied by unmanned equipment. If the hydrogen gas manufacturing and charging apparatus is combined with an apparatus adapted for automatically supplying the hydrogen gas to a fuel cell, unmanned operation of an apparatus powered by a fuel cell becomes possible.

As in the hydrogen gas manufacturing and charging apparatus 100, the proton conductor 31 is made up by a derivative mainly composed of at least one substance selected from the group consisting of fullerene molecules, a cluster mainly composed of carbon and a structured unit made up by tubular or linear carbon, and a proton dissociating group introduced into a carbon atom forming this substance, and the proton generated in the first electrode 32 may be moved to the second electrode 33 through this proton conductor 31, so that the hydrogen gas manufacturing and charging apparatus may be run in atmospheric air satisfactorily. Thus, hydrogen may be manufactured and compressed efficiently without the necessity of adjustments for pressure, temperature or humidity at the time of hydrogen production and compression.

In a manner different from the case of using Nafion as $H_3O^+$ ion conductor, the hydrogen gas manufacturing and charging apparatus may be run even in atmospheric air in the low humidity state, even in the absence of e.g. a humidifying apparatus. That is, since hydrogen may be manufactured and compressed in atmospheric air in the low humidity state, the initial operation at the time of hydrogen production and compression can be accelerated without taking much time until a steady-state running state is achieved. Although a humidifying device may be provided and the moisture may be present for hydrogen production and compression, this is not comprised within the scope of the present invention.

If Nafion as a $H_3O^+$ ion conductor is used, water is yielded with hydrogen production and compression, so that a dehumidifier is needed. With the present embodiment of the hydrogen gas manufacturing and charging apparatus, water is supplied as steam or a gas to the positive electrode 32 for electrolysis and protons so generated are moved through e.g. the proton conductor 31, formed e.g. of fullerenol, to the negative electrode 33, where the proton is converted into hydrogen and compressed, so that production and compression only of hydrogen may be enabled even in the absence of e.g. a dehumidifier. Moreover, since the operation of electrochemical production and compression may be achieved efficiency without dehumidification, the moisture content of the compressed hydrogen gas is only small. Consequently, the dehumidification process as a post-processing is not needed, so that the hydrogen gas may be directly sent to the charging unit 4.

The present invention is directed to an electrochemical apparatus including an electrolytic unit for evolving the hydrogen gas by electrolysis, a pressurizing unit for compressing the hydrogen gas generated in the electrolytic unit, and a charging unit for charging the compressed hydrogen gas into a hydrogen gas tank, in which the pressurizing unit is configured for operating as a fuel cell unit which may be run reversibly by being supplied with the hydrogen gas from the charging unit and with oxygen or an oxygen containing gas.

The electrochemical apparatus according to the present invention is designed and constructed so that the pressurizing unit operates for compressing the hydrogen gas evolved in the electrolytic unit, while it is designed and constructed as a fuel cell unit which may be run reversibly by being supplied with the hydrogen gas from the charging unit and with oxygen or an oxygen containing gas, so that the power from the fuel cell employing the hydrogen gas may be obtained by the same apparatus as generates and compresses the hydrogen gas.

Thus, the apparatus may be further reduced in size because the pressurizing action and the action as the fuel cell are of the same structure, to add to the favorable effect that the power is transformed for the time being into a hydrogen gas and the power may be produced from the hydrogen gas at an optional later time. For example, such a useful application may be contemplated, in which the hydrogen gas is manufactured and charged with the night time power, and the apparatus is taken outdoors during the daytime for use as a fuel cell.

The electrochemical apparatus according to the present invention is preferably designed and constructed so that the pressurizing unit is made up by an electrochemical compressing unit and a pressurizing current controller, the electrochemical compressing unit is made up by a first electrode for decomposing the hydrogen gas into protons, a second electrode for re-converting the proton, generated in the first electrode, into a hydrogen gas, and a proton conductor sandwiched between these two electrodes, with the pressurizing current controller supplying the current corresponding to the pressurizing state of the pressurizing unit to the first and second electrodes. A catalyst layer preferably is provided on both surfaces of the proton conductor.

The electrochemical apparatus according to the present invention is preferably designed and constructed so that the electrolytic unit, the pressurizing unit or the fuel cell unit and the charging unit are controlled by the system controller, which system controller also selects the operation of the compressing the hydrogen gas by the pressurizing unit or the operation as the fuel cell unit.

Likewise, the electrochemical apparatus according to the present invention includes a hydrogen pressure detection means for detecting the hydrogen pressure on the hydrogen gas outputting side of the pressurizing unit and, when a signal from the hydrogen pressure detection means indicates a predetermined pressure, the operation of the pressurizing unit is halted, or the hydrogen gas tank charged with the hydrogen is switched to another tank.

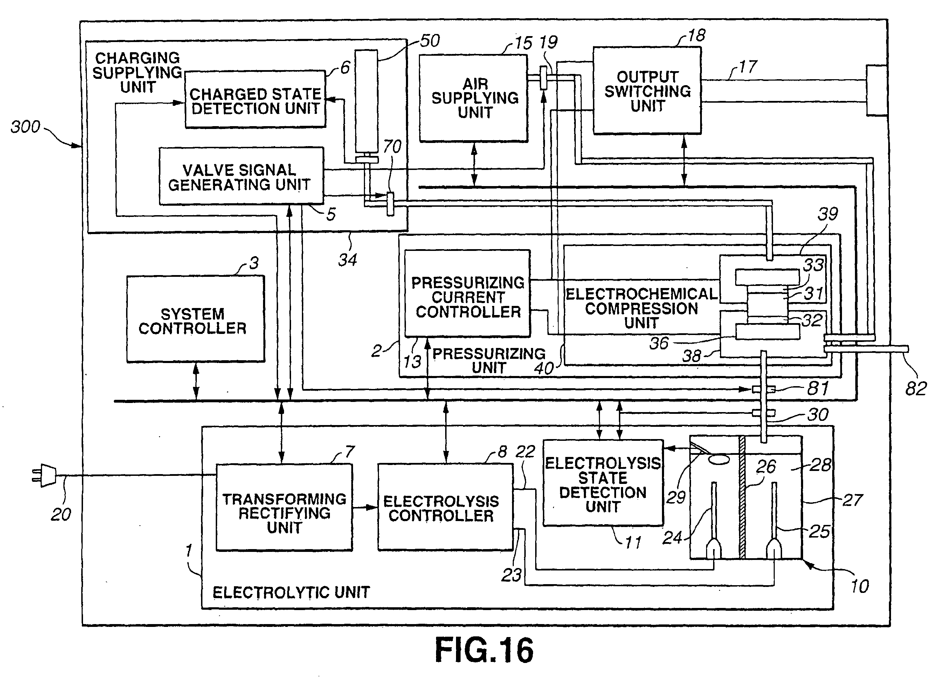

Fig.16 schematically shows the structure of the electrochemical apparatus according to the present invention.

In an electrochemical apparatus 300 of the present invention, shown in Fig.16, a hydrogen gas is generated by the electrolytic unit 1 and generated hydrogen gas is compressed by the pressurizing unit 2 and the so compressed hydrogen gas is charged to the hydrogen gas tank 50. Alternatively, the hydrogen gas is taken out from the hydrogen gas tank 50 and the electrochemical compression unit 40 as the fuel cell unit is run by the hydrogen gas. The electro-chemical compression unit 40 may directly operate as the aforementioned fuel cell unit so that the pressurizing unit 2 may directly be used as the fuel cell.

A charging supplying unit 34 not only charges the hydrogen gas into the hydrogen gas tank, but also supplies the hydrogen gas from the hydrogen gas tank to the fuel cell unit.

In order for the pressurizing unit 2 to operate as the fuel cell unit, it is sufficient to supply the hydrogen gas to the negative electrode 33 of the pressurizing unit 2 and to supply air (oxygen or oxygen-containing gas) to the positive electrode 32. A hydrogen gas valve 81 for the hydrogen gas supplied to the pressurizing unit is closed, while an air valve 19 is opened to send air from an air supplying unit 15 into the positive electrode side gas reservoir chamber 38. The air supplying unit 15 may be a usual fan or simply an air hole for taking in outside air. An air ventilating valve 82 is opened to ventilate air so that oxygen will be sufficiently circulated to prevent the nitrogen concentration from increasing excessively.

An output switching unit 18 is constructed by e.g. a relay. When the pressurizing unit 2 operates as a fuel cell unit, the power generated by the pressurizing unit 2 is supplied to an output connector 17.

The above-described control is managed on the basis of signals from the system controller 3.

In the hydrogen gas manufacturing and charging operations, the output switching unit 18 disconnects the output connector 17 and the pressurizing unit 2 from each other, such that the hydrogen gas valve 81 for the hydrogen gas supplied to the pressurizing unit is opened, while the air valve 19 and the ventilating valve 82 are closed.

With the electrochemical apparatus 300 of the present invention, the hydrogen gas tank, fuel cell unit and the pressurizing unit can be co-owned by the hydrogen gas manufacturing and charging mechanism and the fuel cell mechanism, and hence the electrochemical apparatus can be reduced in size. For example, the hydrogen gas may be charged into the tank during nighttime and, in outing, a user may carry it outdoors for use as a battery. The hydrogen gas bottle may be taken out and used as a common hydrogen gas manufacturing and charging apparatus.

Since the electro-chemical compression unit 40 may be run satisfactorily in atmospheric air, hydrogen may be manufactured or the power may be generated efficiently without the necessity of making adjustments for pressure, temperature or humidity at the time of hydrogen production and compression.

Since the derivative obtained on introducing proton dissociating groups to carbon atoms of e.g. fullerenol is used as a component material of the proton conductor 31, the electrochemical apparatus 300 of the present invention may be run satisfactorily even in atmospheric air of low humidity, in distinction from the case of using Nafion as $H_3O^+$ ion. That is, hydrogen may be compressed or the power may be generated in atmospheric air of low humidity, so that the initial operation at the time of hydrogen production and compression can be accelerated without taking much time until a steady-state running state is achieved. Although a humidifying device may be provided and the moisture may be present for hydrogen production and compression, this is not comprised within the scope of the present invention.

If Nation as a $H_3O^+$ ion conductor is used, water is yielded with hydrogen production and compression, so that a dehumidifier is needed. With the present embodiment of the hydrogen gas manufacturing and charging apparatus, water is supplied as steam or gas to the positive electrode 32 for electrolysis and protons so generated are moved through e.g. the proton conductor 31, formed e.g. of fullerenol, to the negative electrode 33, where the proton is converted into hydrogen and compressed, so that production and compression only of hydrogen may be enabled even in the absence of e.g. a dehumidifier.

According to the present invention, since the operation of electrochemical production and compression may be achieved efficiently without humidification, the moisture content of the compressed hydrogen gas is only small. Consequently, the dehumidification process as a post-process is not needed, so that the hydrogen gas may be directly sent to the charging unit 4.

The present invention is directed to still another electrochemical apparatus including a hydrogen gas pressurizing unit and a charging unit. The hydrogen gas pressurizing unit is made up by an electrochemical compressing unit composed of a first electrode arranged on the water supply side supplying water as steam or in a gaseous state for generating a proton, a second electrode for converting the proton into a hydrogen gas and compressing the so produced hydrogen gas, and a proton conductor sandwiched between these two electrodes, and a pressurizing current controller for supplying the current corresponding to the pressurizing state of the electrochemical compression unit to the first and second electrodes. The charging unit charges the compressed hydrogen gas to the hydrogen gas tank. The hydrogen gas pressurizing unit of the electrochemical apparatus plays the role of a fuel cell unit which may be run reversibly by being supplied with the hydrogen gas from the charging unit and with oxygen or an oxygen-containing gas.

The electrochemical apparatus according to the present invention is designed and constructed so that the pressurizing unit operates for compressing the hydrogen gas evolved in the electrolytic unit and as a fuel cell unit which may be run reversibly by being supplied with the hydrogen gas from the charging unit and with oxygen or an oxygen containing gas, so that the power from the fuel cell employing the hydrogen gas may be obtained by the same apparatus as generates and compresses the hydrogen gas.

Thus, the apparatus may be further reduced in size because the pressurizing action and the action as the fuel cell are of the same structure, to add to the favorable effect that the power is transformed for the time being into a hydrogen gas and the power may be produced from the hydrogen gas at an optional later time. For example, such a useful application may be considered, in which the hydrogen has is manufactured and charged with the night time power, and the apparatus is taken outdoors during the daytime for use as a fuel cell.

With the electrochemical apparatus according to the present invention, it is preferred that a catalyst layer is provided on each of both surfaces of the proton conductor, and that the surface of the first electrode not intimately contacted with the proton conductor is contacted with steam or with steam-containing atmospheric air, with hydrogen being generated and compressed on the second electrode side. Also, the electrochemical apparatus according to the present invention is preferably designed and constructed so that the hydrogen gas pressurizing unit or the fuel cell unit and the charging unit are controlled by the system controller, which system controller also selects the operation of compressing the hydrogen gas by the hydrogen gas pressurizing unit or the operation of the fuel cell unit.

Additionally, the electrochemical apparatus according to the present invention includes a hydrogen pressure detection means for detecting the hydrogen pressure on the hydrogen gas outputting side of the pressurizing unit and, when a signal from the hydrogen pressure detection means indicates a predetermined pressure, the operation of the pressurizing unit is halted, or the hydrogen gas tank charged with the hydrogen is switched to another tank.

With the above-described respective electrochemical apparatus of the present invention, a second fuel cell unit, which may be run reversibly by being supplied with the hydrogen gas from the charging unit, and with oxygen or the oxygen-containing gas, may be provided, and the electrochemical energy may be taken out from this second fuel cell unit. It is preferred that there is provided valving means for controlling the amount of the hydrogen gas supplied from the charging unit to the second fuel cell unit, and that the system controller controls the operation and/or the outputting of the second fuel cell unit or detects the outputting.

By so doing, the second fuel cell unit is constructed independently of the pressurizing unit, so that any optional voltage may be produced.

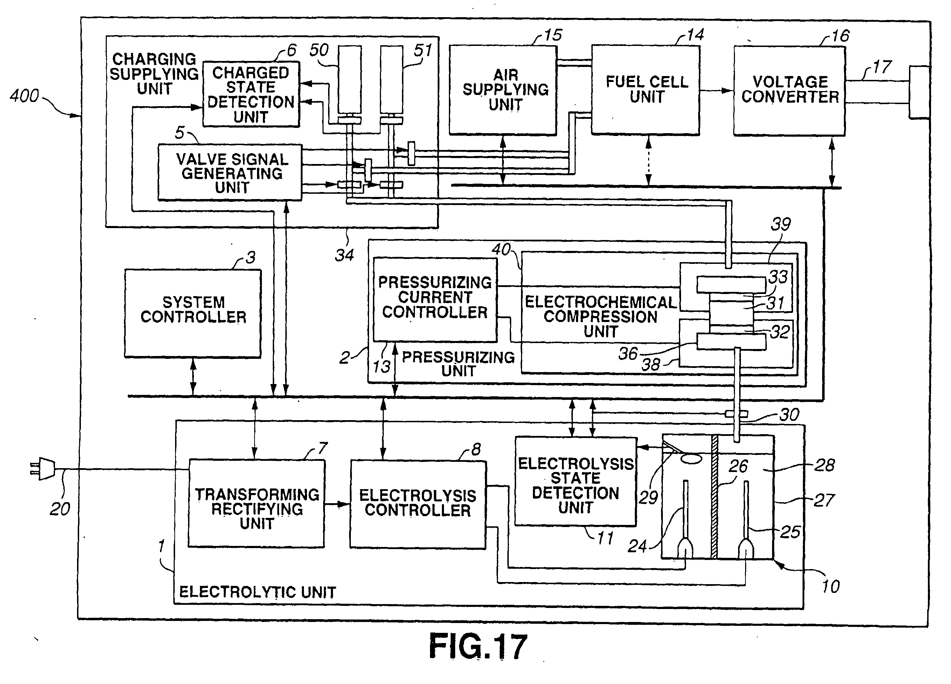

Fig.17 schematically shows the structure of a fuel cell apparatus 400 in which a second fuel cell unit is provided to the electrochemical apparatus according to the present invention.

With the fuel cell apparatus 400, shown in Fig. 17, the hydrogen gas is generated by the electrolytic unit 1, the generated hydrogen gas is compressed by the pressurizing unit 2 and the so compressed hydrogen gas is charged to the hydrogen gas tank 50. Or, the hydrogen gas is taken out from the hydrogen gas tank 50 and the electro-chemical compression unit 40 as the fuel cell unit is run by the hydrogen gas. It is noted that the hydrogen gas is supplied to the second fuel cell unit 14 by the hydrogen gas tank 50 or 51. For example, as the hydrogen gas is supplied from the pressurizing unit 2 to the hydrogen gas tank 50, the hydrogen gas may be supplied to the fuel cell unit 14 to effect hydrogen manufacture and power generation simultaneously. The air supplying unit 15, which furnishes air (oxygen or an oxygen-containing gas) to the second fuel cell unit 14, may, for example, be a usual fan.

A voltage converter 16, which converts the power from the second fuel cell unit 14 into a predetermined voltage, may convert the voltage not only into the D.C. but also into A.C. such that it may be a switching regulator or an inverter.

The power from the voltage converter 16 is supplied via output connector 17 to a unit outside the apparatus as the power used therein.

In this case, since the operation of the manufacture and charging of the hydrogen gas and the operation as the fuel cell occur simultaneously, the present electrochemical apparatus may be put to a still broader use in addition to the use as the hydrogen gas manufacturing and charging apparatus according to the above-described still further aspect of the present invention.

In a large variety of modifications of the present invention, the power supply may be not only the commercial power supply for household use, but also any suitable power supply without regard to the configuration of the power generation, such as wind power generation, solar power generation, geothermal power generation, biomass power generation, wave force power generation, exemplified by tidal sea water power generation, artificial power generation, secondary batteries, such as car batteries, or primary batteries, such as dry cell.

The electrolytic unit 1 may be of the type in which the electrodes are provided in the electrolytic solution, such as the type in which sulfuric acid or alkali hydroxide is used as an electrolytic solution, or of the type in which a solid high molecular electrolytic film is used and pure water is supplied to the positive electrode side.

The number of the hydrogen tanks, provided to the charging unit, may be arbitrary, while the sort of the hydrogen gas tank may be arbitrary, such that a hollow high pressure tank, a hydrogen gas occlusive alloy, a hydrogen gas occlusive carbonaceous material or a hydrogen gas occlusive tank, the inside of which is filled with metal halides, may be used.

The hydrogen gas occlusive alloy may be exemplified by $LaNi_5$, $CaNi_5$, $TiCo0.5Mn0.5$, $TiCo0.5Fe0.5$ and $TiFe0.8Ni0.15V0.05$. The hydrogen gas occlusive carbonaceous material may be exemplified by carbon nano-tubes, carbon fibers or activated charcoal, while the metal halides may be exemplified by $NaAlH_4$ and $LiAlH_4$.

The system controller 3 may be provided in a concentrated form, or part or all functions thereof may be provided distributed in the electrolytic unit, pressurizing unit or in the charging unit. The system controller may be formed by a CPU or by a hardware. The system controller 3 may be configured for detecting or controlling the fuel cell unit 14, as indicated by a broken line in Fig.17.

Industrial Applicability

The hydrogen gas manufacturing and charging apparatus according to the present invention includes an electrolytic unit for evolving the hydrogen gas by electrolysis and hence is able to manufacture a hydrogen gas readily efficiently. This apparatus includes a pressurizing unit and a charging unit and hence is able to compress and charge a large quantity of hydrogen efficiently. Moreover, it may be reduced in size and portable and hence may be designed as an apparatus that may be carried by a user in person for manufacturing and charging the hydrogen gas extremely readily. By taking and using the hydrogen gas tank of the hydrogen gas manufacturing and charging apparatus, a large variety of equipment run on the hydrogen gas may be in operation, as a result of which the fuel cell having the hydrogen gas as an active material may readily be put to personal use.

With the hydrogen gas manufacturing and charging apparatus, according to the present invention, in which there is provided an electrochemical compressing unit for supplying water as steam or in a gaseous form to the first electrode to yield a proton thereat, causing movement of the so generated proton through a proton conductor to the second electrode, where the generated proton is converted to hydrogen and the so generated hydrogen is compressed, the hydrogen gas may be manufactured and compressed readily efficiently, such that a large quantity of hydrogen may be compressed and charged efficiently. With the present apparatus, in which the hydrogen gas is yielded from the moisture in air so as to be then compressed and charged in the hydrogen gas tank, maintenance for e.g. an electrolytic solution in electrolysis may be omitted. Moreover, if the power supply necessary for operation of the equipment is obtained from the energy available from nature, it is possible to provide a hydrogen gas manufacturing and charging apparatus which may be run semi-permanently without the necessity for maintenance.

With the electrochemical apparatus according to the present invention, in which the pressurizing unit operates for compressing the hydrogen gas evolved in the electrolytic unit and is configured for operating also as a fuel cell unit operable reversibly on being supplied with a hydrogen gas from the charging unit and with oxygen or an oxygen-containing gas, the power from the fuel cell exploiting the hydrogen gas may be obtained with the same apparatus as that configured for manufacturing and charging the hydrogen gas. With the present electrochemical apparatus, the apparatus may be reduced in size, because the pressurizing action and the action as a fuel cell are of the same structure, to add to the favorable effect that a sole apparatus may be used for converting the power once into a hydrogen gas and the power may then be recovered from the hydrogen gas at an optional later time. With the present electrochemical apparatus, such a useful application may be contemplated, in which the hydrogen has is manufactured and charged with the night time power, and the apparatus is taken outdoors during the daytime for use as a fuel cell.

**Claims**

1. A hydrogen gas manufacturing and charging apparatus comprising
   an electrolytic unit for generating a hydrogen gas by electrolysis;
   a pressurizing unit for compressing said hydrogen gas evolved in said electrolytic unit; and
   a charging unit for charging said hydrogen gas compressed by said pressurizing unit into a hydrogen gas tank.

2. The hydrogen gas manufacturing and charging apparatus according to claim 1 wherein said pressurizing unit includes an electrochemical compression unit for electrochemically compressing said hydrogen gas and a pressurizing current controller, and wherein said electrochemical compression unit includes a first electrode for decomposing said hydrogen gas into a proton ($H^+$), a second electrode for converting said proton generated in said first electrode to said hydrogen gas and a proton conductor sandwiched between said first and second electrodes; said pressurizing current controller supplying the current corresponding to the pressurizing state of said pressurizing unit to said first and second electrodes.

3. The hydrogen gas manufacturing and charging apparatus according to claim 2 wherein a catalyst layer is provided on each of both surfaces of said proton conductor.

4. The hydrogen gas manufacturing and charging apparatus according to claim 2 wherein said proton conductor is formed by a derivative which is mainly composed of at least one material selected from the group consisting of a fullerene molecule, a cluster mainly composed of carbon and a tubular or linear structured unit of carbon, and in which the proton dissociating group is introduced to a carbon atom forming said material, and wherein said proton generated in said first electrode is moved to said second electrode through said proton conductor.

5. The hydrogen gas manufacturing and charging apparatus according to claim 1 wherein said electrolytic unit, pressurizing unit and the charging unit are controlled by a system controller.

6. The hydrogen gas manufacturing and charging apparatus according to claim 1 further comprising
hydrogen pressure detection means for detecting the hydrogen pressure on the hydrogen gas outputting side of said pressurizing unit and wherein, when a signal from said hydrogen pressure detection means indicates a predetermined pressure, the operation of said pressurizing unit is halted or a hydrogen gas tank to be charged with hydrogen is switched to another.

7. A hydrogen gas manufacturing and charging apparatus comprising
a hydrogen gas pressurizing unit including an electrochemical compression unit having a first electrode on a water supplying side from which water is supplied as steam or in a gaseous state to generate a proton, a second electrode for converting the proton into an oxygen gas and for compressing the resulting hydrogen gas, and a proton conductor sandwiched between said first and second electrodes, and a pressurizing current controller for supplying the current corresponding to the pressurizing state of said electrochemical compression unit to said first and second electrodes; and
a charging unit for charging the hydrogen gas compressed by said hydrogen gas pressurizing unit to a hydrogen gas tank.

8. The hydrogen gas manufacturing and charging apparatus according to claim 7 wherein the surface of said first electrode not intimately contacted with said proton conductor is contacted with steam or steam-containing atmospheric air and wherein said hydrogen gas is generated and compressed in said second electrode.

9. The hydrogen gas manufacturing and charging apparatus according to claim 7 wherein said hydrogen gas pressurizing unit and the charging unit are controlled by a system controller.

10. The hydrogen gas manufacturing and charging apparatus according to claim 7 further comprising hydrogen pressure detecting means for detecting the hydrogen pressure on the hydrogen gas outputting side of said pressurizing unit and wherein, when a signal from said hydrogen gas pressure detection means indicates a predetermined pressure, the operation of said pressurizing unit is halted or a hydrogen gas tank to be charged with hydrogen is switched to another.

11. The hydrogen gas manufacturing and charging apparatus according to claim 7 wherein a catalyst layer is mounted on each of said proton conductor.

12. The hydrogen gas manufacturing and charging apparatus according to claim 7 wherein said proton conductor is formed by a derivative which is mainly composed of at least one material selected from the group consisting of a fullerene molecule, a cluster mainly composed of carbon and a tubular or linear structured unit of carbon, and in which the proton dissociating group is introduced to a carbon atom forming this substance, and wherein said proton generated in said first electrode is moved to said second electrode through said proton conductor.

13. The hydrogen gas manufacturing and charging apparatus according to claim 12 wherein said proton dissociating group is BXH, where X is an optional bivalent atom or atomic group and H is a hydrogen atom.

14. The hydrogen gas manufacturing and charging apparatus according to claim 13 wherein said proton dissociating group is BOH or BYOH, where Y is an optional bivalent atom or atomic group.

15. The hydrogen gas manufacturing and charging apparatus according to claim 14 wherein said proton dissociating group is a group selected from BOH, $BOSO_3H$, $BCOOH$, $BSO_3H$, $BOPO(OH)_2$ and $BC_6H_4BSO_3H$.

16. The hydrogen gas manufacturing and charging apparatus according to claim 12 wherein said fullerene molecule is a molecule of a spherically-shaped carbon cluster Cm (m = 36, 60, 70, 76, 78, 80, 82, 84, 86, 88, 90, 92, 94, 96 and so forth).

17. An electrochemical apparatus comprising
an electrolytic unit for generating a hydrogen gas by electrolysis;
a pressurizing unit for compressing said hydrogen gas evolved in said electrolytic unit; and
a charging unit for charging said hydrogen gas compressed by said pressurizing unit into a hydrogen gas tank;
said pressurizing unit being configured for operating as a fuel cell unit reversibly run on being supplied with a hydrogen gas compressed by said pressurizing unit and with oxygen or an oxygen-containing gas.

18. The electrochemical apparatus according to claim 17 wherein said pressurizing unit includes an electrochemical compressing unit for electrochemically decomposing said hydrogen gas into protons and a pressurizing current controller;

said electrochemical compressing unit includes a first electrode for decomposing said hydrogen gas into a proton, a second electrode for re-converting the proton generated in said first electrode into said hydrogen gas and a proton conductor sandwiched between said first and second electrodes;

said pressurizing current controller supplying the current corresponding to the pressurizing state of said pressurizing unit to said first and second electrodes.

19. The electrochemical apparatus according to claim 18 wherein a catalyst layer is mounted on each of both surfaces of said proton conductor.

20. The electrochemical apparatus according to claim 18 wherein said proton conductor is formed by a derivative which is mainly composed of at least one material selected from the group consisting of a fullerene molecule, a cluster mainly composed of carbon and a tubular or linear structured unit of carbon, and in which a proton dissociating group is introduced to a carbon atom forming this substance, and wherein movement of the proton generated in said first electrode to said second electrode or vice versa is carried out via said proton conductor.

21. The electrochemical apparatus according to claim 17 wherein said electrolytic unit, said pressurizing unit or the fuel cell unit and said charging unit are controlled by said system controller.

22. The electrochemical apparatus according to claim 21 wherein said system controller selects the hydrogen gas compressing operation by said pressurizing unit and the operation of said fuel cell unit.

23. The electrochemical apparatus according to claim 17 further comprising hydrogen pressure detecting means for detecting the hydrogen pressure of the hydrogen gas outputting side of said pressurizing unit and wherein, when a signal from said hydrogen gas pressure detection means indicates a predetermined pressure, the operation of said pressurizing unit is halted or a hydrogen gas tank to be charged with hydrogen is switched to another.

24. The electrochemical apparatus according to claim 17 further comprising a second fuel cell unit reversibly run on being supplied with a hydrogen gas from said charging unit and oxygen or an oxygen-containing gas and wherein the electrochemical energy is taken out from said second fuel cell unit.

25. An electrochemical apparatus comprising

a hydrogen gas pressurizing unit made up by an electrochemical compression unit having a first electrode on a water supplying side from which hydrogen is supplied as steam or in a gaseous state, a second electrode for converting the proton into an oxygen gas and for compressing the resulting hydrogen gas, and a proton conductor sandwiched between said first and second electrodes, and a pressurizing current controller for supplying the current corresponding to the pressurizing state of the electrochemical compression unit to said first and second electrodes; and

a charging unit for charging said hydrogen gas compressed by said hydrogen gas pressurizing unit to a hydrogen gas tank;

said hydrogen gas pressurizing unit being also configured for operating as a fuel cell unit run reversibly on being supplied with said hydrogen gas from said charging unit and oxygen or an oxygen-containing gas.

26. The electrochemical apparatus according to claim 25 wherein the surface of said first electrode not intimately contacted with said proton conductor is contacted with steam or a steam-containing atmospheric air and wherein said hydrogen gas is generated and compressed on said second electrode.

27. The electrochemical apparatus according to claim 25 wherein said hydrogen gas pressurizing unit or the fuel cell unit and the charging unit are controlled by said system controller.

28. The electrochemical apparatus according to claim 27 wherein said system controller selects the hydrogen gas compressing operation by said hydrogen gas pressurizing unit and the operation of said fuel cell unit.

29. The electrochemical apparatus according to claim 25 further comprising hydrogen pressure detecting means for detecting the hydrogen pressure of the hydrogen gas outputting side of said pressurizing unit and wherein, when a signal from said hydrogen gas pressure detection means indicates a predetermined pressure, the operation of said pressurizing unit is halted or a hydrogen gas tank to be charged with hydrogen is switched to another.

30. The electrochemical apparatus according to claim 25 wherein a catalyst layer is mounted on each of both surfaces of said proton conductor.

31. The electrochemical apparatus according to claim 25 wherein said proton conductor is formed by a derivative which is mainly composed of at least one material selected from the group consisting of a fullerene molecule, a cluster mainly composed of carbon and a tubular or linear structured unit of carbon, and in which the proton dissociating group is introduced to a carbon atom forming said material, and wherein movement of the proton generated in said first electrode to said second electrode or vice versa is carried out via said proton conductor.

**32.** The electrochemical apparatus according to claim 31 wherein said proton dissociating group is BXH, where X is an optional bivalent atom or atomic group and H is a hydrogen atom.

**33.** The electrochemical apparatus according to claim 32 wherein said proton dissociating group is BOH or BYOH, where Y is an optional bivalent atom or atomic group.

**34.** The electrochemical apparatus according to claim 33 wherein said proton dissociating group is a group selected from BOH, $BOSO_3H$, BCOOH, $BSO_3H$, $BOPO(OH)_2$ and $BC_6H_4BSO_3H$.

**35.** The electrochemical apparatus according to claim 31 wherein said fullerene molecule is a molecule of a spherically-shaped carbon cluster Cm (m = 36, 60, 70, 76, 78, 80, 82, 84, 86, 88, 90, 92, 94, 96 and so forth).

**36.** The electrochemical apparatus according to claim 25 further comprising a second fuel cell unit reversibly run on being supplied with a hydrogen gas from said charging unit and oxygen or an oxygen-containing gas and wherein the electrochemical energy is taken out from said second fuel cell unit.

**37.** The electrochemical apparatus according to claim 36 further comprising
valving means for controlling the quantity of the hydrogen gas supplied from said charging unit to said second fuel cell unit.

**38.** The electrochemical apparatus according to claim 36 wherein said hydrogen gas pressurizing unit or the fuel cell unit and said charging unit are controlled by a system controller.

FIG.1

**FIG.2**

CHARGING UNIT

CHARGED STATE DETECTION UNIT

VALVE SIGNAL GENERATING UNIT

HYDROGEN TANK HOLDING UNIT

50 51 52 53 54 55 56 57 58

60 61 68 78

70 71 62 63 64 65 66 67 76 77

72 73 74 75

SYSTEM CONTROLLER

PRESSURIZING CURRENT CONTROLLER

ELECTROCHEMICAL COMPRESSION UNIT

PRESSURIZING UNIT

37 39 33 31 32 38 36

41 42

ELECTROLYSIS STATE DETECTION UNIT

TRANSFORMING RECTIFYING UNIT

ELECTROLYSIS CONTROLLER

ELECTROLYTIC UNIT

28 27 25 30 26 29 24

10 11

1 7 8 22 23

100 4 6 5 3 9 13 40 21

20

FIG.3

FIG.4A

FIG.4B

**FIG.5A**

**FIG.5B**

**FIG.6A**      **FIG.6B**      **FIG.6C**

**FIG.6D**

**FIG.6E**

$C_{18}H_{24}$          $C_{20}H_{20}$          $C_{22}H_{28}$          $C_{60}$

**FIG.6F**      **FIG.6G**      **FIG.6H**      **FIG.6 I**

$C_{60}$

**FIG.6J**

$C_{76}$

**FIG.6K**

$C_{70}$

**FIG.6L**

$C_{78}$

**FIG.6M**

FIG.7A

FIG.7B

FIG.7C

FIG.7D

CUBIC
SYSTEM DIAMOND

# FIG.8A

HEXAGONAL
SYSTEM DIAMOND

# FIG.8B

6H TYPE
DIAMOND

# FIG.8C

# FIG.8D

HEXAGONAL
SYSTEM DIAMOND

# FIG.8E

# FIG.8F

DIAMOND

# FIG.8G

**FIG.9A**

~INDICATES LINKAGE CHAIN
SUCH AS–(CH2)–n, ~(CF2)– n

**FIG.9B**

**FIG.9C**

**FIG.9D**

**FIG.9E**

**FIG.9F**

**FIG.9G**

**FIG.9H**

**FIG.10A**

*Cn*

**FIG.10B**

*Cn*

**FIG.10C**

*Cf*

FIG.11

**FIG.12**

START

OUTPUT ON SIGNAL → TRANSFORMING RECTIFYING UNIT (7)

ELECTROLYSIS STATE DETECTION UNIT (11)
CHARGED STATE DETECTION UNIT (6)
SENSOR FOR DETECTING THE HYDROGEN GAS SUPPLIED TO THE PRESSURIZING UNIT (21)
SENSOR FOR DETECTING THE HYDROGEN GAS OUTPUT FROM THE PRESSURIZING UNIT (42) → DETECT SIGNAL

QUANTITY OF ELECTROLYTIC SOLUTION IN SHORTAGE?
— YES → ALARM
— NO

VALUE OF SENSOR (21) < PREDETERMINED VALUE?
— YES → COMMAND CURRENT INCREASE TO ELECTROLYSIS CONTROLLER (8)
— NO → COMMAND CURRENT DECREASE TO ELECTROLYSIS CONTROLLER (8)

VALUES OF SENSORS (42),(21) < PREDETERMINED VALUES?
— YES → COMMAND CURRENT INCREASE TO PRESSURIZING CURRENT CONTROLLER (13)
— NO → COMMAND CURRENT DECREASE TO PRESSURIZING CURRENT CONTROLLER (13)

HAS TANK PRESSURE REACHED A PREDETERMINED PRESSURE?
— NO
— YES

OUTPUT VALVE CLOSING SIGNAL TO VALVE SIGNAL GENERATING UNIT (5) AND END

FIG.13

**FIG.14**

EP 1 426 468 A1

**FIG.15**

FIG.16

EP 1 426 468 A1

**FIG.17**

## INTERNATIONAL SEARCH REPORT

| International application No. |
|---|
| PCT/JP02/09291 |

**A. CLASSIFICATION OF SUBJECT MATTER**
Int.Cl$^7$ C25B1/02, 13/04, C01B3/04, H01M8/00

According to International Patent Classification (IPC) or to both national classification and IPC

**B. FIELDS SEARCHED**

Minimum documentation searched (classification system followed by classification symbols)
Int.Cl$^7$ C25B1/00-15/08, C01B3/04, H01M8/00

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2002 |
| Kokai Jitsuyo Shinan Koho | 1971-2002 | Jitsuyo Shinan Toroku Koho | 1996-2002 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2001-130901 A (Mitsubishi Corp.),<br>15 May, 2001 (15.05.01),<br>Claims; description, page 7, left column, line 19<br>to page 15, left column, line 43<br>(Family: none) | 1<br>2-38 |
| Y | JP 08-3144 A (Japan Storage Battery Co., Ltd.),<br>02 February, 1996 (02.02.96),<br>Full description<br>(Family none) | 1-38 |
| A | JP 04-364139 A (Mitsui Toatsu Chemicals, Inc.),<br>16 December, 1992 (16.12.92),<br>(Family: none) | 1-38 |

| ☒ Further documents are listed in the continuation of Box C. | ☐ See patent family annex. |
|---|---|

\* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>19 November, 2002 (19.11.02) | Date of mailing of the international search report<br>03 December, 2002 (03.12.02) |
|---|---|
| Name and mailing address of the ISA/<br>Japanese Patent Office | Authorized officer |
| Facsimile No. | Telephone No. |

Form PCT/ISA/210 (second sheet) (July 1998)

## INTERNATIONAL SEARCH REPORT

| International application No. |
|---|
| PCT/JP02/09291 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 11-279782 A  (Mitsubishi Materials Corp.), 12 October, 1999 (12.10.99), (Family: none) | 1-38 |

Form PCT/ISA/210 (continuation of second sheet) (July 1998)